(19) Europäisches Patentamt
European Patent Office
Office européen des brevets

(11) EP 1 930 374 A1

(12) **EUROPEAN PATENT APPLICATION**
published in accordance with Art. 153(4) EPC

(43) Date of publication:
**11.06.2008 Bulletin 2008/24**

(21) Application number: **06810639.2**

(22) Date of filing: **27.09.2006**

(51) Int Cl.:
***C08L 101/00*** *(2006.01)* ***C08J 5/04*** *(2006.01)*
***C08K 7/02*** *(2006.01)* ***C08L 33/14*** *(2006.01)*

(86) International application number:
**PCT/JP2006/319148**

(87) International publication number:
**WO 2007/037260 (05.04.2007 Gazette 2007/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.09.2005 JP 2005283960**
**26.01.2006 JP 2006017227**

(71) Applicant: **TORAY INDUSTRIES, INC.**
**Tokyo 103-8666 (JP)**

(72) Inventors:
- **NAKAYAMA, Yoshifumi**
  **Matsuyama-shi, Ehime 791-8043 (JP)**
- **HONMA, Masato**
  **Matsuyama-shi, Ehime 790-0038 (JP)**

(74) Representative: **Oser, Andreas et al**
**Prüfer & Partner GbR**
**Patentanwälte**
**Sohnckestrasse 12**
**81479 München (DE)**

(54) **FIBER-REINFORCED THERMOPLASTIC RESIN COMPOSITION, METHOD FOR PRODUCING SAME, AND CARBON FIBER FOR THERMOPLASTIC RESIN**

(57) According to the present invention, a fiber-reinforced thermoplastic resin composition that is superior in adhesivity between reinforcing fiber and thermoplastic resin is provided. It is possible to sufficiently improve mechanical properties of a molded product with such composition. Such fiber-reinforced thermoplastic resin composition comprises a (meth)acrylic polymer (A1) having an aminoalkylene group in a side chain or a polymer having an oxazoline group (A2) (0.1% to 10% by weight), reinforcing fibers (B) (1% to 70% by weight), and a thermoplastic resin (C) (20% to 98.9% by weight).

EP 1 930 374 A1

## Description

### Technical Field

The present invention relates to a fiber-reinforced thermoplastic resin composition, a method for producing the same, and carbon fibers for thermoplastic resin. A molded product comprising the fiber-reinforced thermoplastic resin composition of the present invention has good interface adhesion between reinforcing fibers and thermoplastic resin, and thus it is superior in strength properties and impact-resistant properties. Therefore, it is preferably used for electric or electronic apparatus, office automation apparatus, parts of electric household appliances or automobiles, internal members, housings, and the like.

### Background Art

Compositions comprising reinforcing fibers and thermoplastic resin have been widely used for automobile and electric or electronic apparatus applications because they are lightweight and have excellent mechanical properties.

Various forms of reinforcing fibers used for the above fiber-reinforced thermoplastic resin compositions reinforce molded products depending on applications. Examples of such reinforcing fibers used include metal fibers such as aluminium fibers or stainless steel fibers, organic fibers such as alamid fibers or PBO fibers, inorganic fibers such as silicon carbide fibers, and carbon fibers. However, in order to improve lightweight properties in view of specific strength and specific stiffness, carbon fibers are preferable. In particular, polyacrylonitrile carbon fibers are preferably used.

It is possible to improve mechanical properties of molded products comprising the above fiber-reinforced thermoplastic resin compositions by increasing the content of reinforcing fibers such as carbon fibers. However, increased reinforcing fiber content results in an increase in the viscosity of a thermoplastic resin composition comprising reinforcing fibers. As a result, in addition to loss of molding processability, the appearance of a molded product deteriorates. Further, strength reduction often occurs due to the generation of areas unfilled with thermoplastic resin.

Thus, as a means of improving mechanical properties without causing an increase in the reinforcing fiber content, a method for improving mechanical properties of a molded product by improving the interface adhesion between reinforcing fibers and thermoplastic resin is used.

In the cases in which reinforcing fibers are carbon fibers, the interface adhesion to thermoplastic resin is mainly caused by intermolecular force. In some cases, sufficient interface adhesion cannot be achieved. Thus, there is a method comprising allowing carbon fibers to be subjected to an oxidation treatment so as to imparting a functional group such as a carboxyl group, a hydroxyl group, or a carbonyl group to carbon fiber surfaces, thereby improving the interface adhesion due to chemical bonds to functional groups contained in thermoplastic resin. However, if the amount of oxidation treatment for carbon fiber is increased, the graphite structure of a carbon fiber surface is destroyed, resulting in strength reduction in the carbon fiber itself. In such case, such strength reduction may negatively influence mechanical properties of a molded product.

In general, after surface oxidation treatment of carbon fibers, a sizing agent is applied to a carbon fiber bundle in order to improve the convergence property of fiber bundle. Examples of sizing agents that have been suggested include urethane resin (see Patent Document 1), polyamide resin (see Patent Document 2), unsaturated-dicarbon-acid-modified polypropylene resin (see Patent Document 3), and a polymer having a (meth)acrylic ester monomer unit (see Patent Document 4). However, in some cases, due to the limitation in the surface area subjected to oxidation treatment, functional groups in a sufficient amount for a reaction with a sizing agent are not imparted to the surfaces of carbon fibers subjected to a usual oxidation treatment. Further, some types of sizing agents have poor reactivity with functional groups on carbon fiber surfaces. Furthermore, when a compound having a highly hydrophilic bond such as a urethane bond or an amide bond is used as a sizing agent, a molded product tends to absorb water. Accordingly, mechanical properties might deteriorate.

Thus, as an attempt to further improve the interface adhesion between carbon fibers and thermoplastic resin, a method comprising adding, as a third component, a compound having a polyfunctional group that can chemically bind to a functional group on a carbon fiber surface and a functional group of thermoplastic resin has been suggested (Patent Documents 5 and 6). Patent Document 5 discloses a compound having a plurality of amino groups. In addition, Patent Document 6 discloses a compound having a plurality of amino groups, which is used for carbon fiber-reinforced resin comprising carbon fibers and acid-modified polyolefin resin. Nevertheless, such compound having a plurality of amino groups is a low-molecular-weight compound having a molecular weight of less than 1,000. Thus, in some cases, the interface becomes weak or degradation occurs at a temperature at which the processing of a fiber-reinforced thermoplastic resin composition takes place, resulting in an insufficient chemical reaction of a functional group on a carbon fiber surface and a functional group of thermoplastic resin. Further, mechanical properties of a molded product may deteriorate due to the generation of voids of cracked gas. In addition, in some cases, such low-molecular-weight compound disperses in thermoplastic resin before chemically reacting with a functional group on a carbon fiber surface, so that sufficient

interface adhesion cannot be obtained. Therefore, a molded product superior in strength properties and impact-resistant properties cannot be obtained by conventional methods, which has been problematic.

Patent Document 1: JP Patent (Kokai) No. 58-126375 A (1983) (Claims)
Patent Document 2: JP Patent (Kokai) No. 53-106752 A (1978) (Claims)
Patent Document 3: JP Patent (Kokai) No. 6-107442 A (1994) (Claims)
Patent Document 4: JP Patent (Kokai) No. 2005-146431 A (Claims)
Patent Document 5: JP Patent (Kokai) No. 4-228677 A (1992) (Claims)
Patent Document 6: JP Patent (Kokai) No. 2005-213478 A (Claims)

Disclosure of the Invention

In view of the above problems of the prior art, it is an objective of the present invention to provide: a fiber-reinforced thermoplastic resin composition obtained by using reinforcing fibers, thermoplastic resin, and a polymer having excellent chemical reactivity with reinforcing fibers, thermoplastic resin, such composition having improved interface adhesion that results in the sufficient improvement of mechanical properties of a molded product; a method for producing the same; and a carbon fiber for thermoplastic resin.

The present inventors have found that mechanical properties of a molded product can be specifically improved and the above objective can be achieved by adding, as a third component, a (meth)acrylic polymer having an aminoalkylene group in a side chain or a polymer having an oxazoline group in a side chain to reinforcing fibers and a thermoplastic resin. This has led to the completion of the present invention.

Specifically, the fiber-reinforced thermoplastic resin composition of the present invention is a fiber-reinforced thermoplastic resin composition comprising a (meth)acrylic polymer (A1) having an aminoalkylene group in a side chain (0.1% to 10% by weight), reinforcing fibers (B) (1% to 70% by weight), and a thermoplastic resin (C) (20% to 98.9% by weight).

In addition, the fiber-reinforced thermoplastic resin composition of the present invention is a fiber-reinforced thermoplastic resin composition comprising a polymer (A2) having an oxazoline group in a side chain (0.1 % to 10% by weight), reinforcing fibers (B) (1% to 70% by weight), and a thermoplastic resin (C) (20% to 98.9% by weight).

In a preferred embodiment of the fiber-reinforced thermoplastic resin composition of the present invention, the above fiber-reinforced thermoplastic resin composition may further comprise a polymer (D) (0% to 10% by weight) having at least one functional group selected from the group consisting of a carboxyl group, an acid anhydride group, and an epoxy group.

In addition, a 1st method for producing the fiber-reinforced thermoplastic resin composition of the present invention is a method for producing a fiber-reinforced thermoplastic resin composition comprising at least the following steps 1a, 2a, and 3a:

step 1a of applying a (meth)acrylic polymer (A1) having an aminoalkylene group in a side chain or a polymer (A2) having an oxazoline group in a side chain (0.1 % to 10% by weight) to reinforcing fibers (B) (1% to 70% by weight);
step 2a of melting a thermoplastic resin (C); and
step 3a of mixing the reinforcing fibers obtained in step 1a with the thermoplastic resin melted in step 2a and integrating the resultant with a thermoplastic resin (C) (20% to 98.9% by weight).

Further, a 2nd method for producing the fiber-reinforced thermoplastic resin composition of the present invention is a method for producing a fiber-reinforced thermoplastic resin composition comprising at least the following steps 1b, 2b, and 3b:

step 1b of processing reinforcing fibers (B) into sheet-type fabric such as knitted fabric, woven cloth, web, nonwoven cloth, felt, or mat;
step 2b of applying a (meth)acrylic polymer (A1) having an aminoalkylene group in a side chain or a polymer (A2) having an oxazoline group in a side chain (0.1 % to 10% by weight) to the fabric (1% to 70% by weight) obtained in step 1b; and
step 3b of applying thermoplastic resin (C) (20% to 98.9% by weight) to the fabric to which a (meth)acrylic polymer (A1) having an aminoalkylene group in a side chain or a polymer (A2) having an oxazoline group in a side chain has been applied in step 2b and carrying out heat melting for integration.

In a preferred embodiment of a method for producing the fiber-reinforced thermoplastic resin composition of the present invention, the method further comprises applying a polymer (D) having at least one functional group selected from the group consisting of a carboxyl group, an acid anhydride group, and an epoxy group after applying a (meth)acrylic polymer (A1) having an aminoalkylene group in a side chain or a polymer (A2) having an oxazoline group in a side chain in the above steps 2a and 2b.

Also, the present inventors have found that mechanical properties of a molded product can be specifically improved and the above objective can be achieved by obtaining such molded product by allowing a (meth)acrylic polymer having the surface atom ratio between nitrogen and carbon (nitrogen atom N/carbon atom C) of 0.001 or more (measured by Electron spectroscopy for chemical analysis) and saturated water absorption of 8% by weight or less at a temperature of 25°C and a humidity of 65% to adhere to carbon fibers and integrating the resultant with thermoplastic resin. This has led to the completion of the present invention.

Specifically, the carbon fibers for thermoplastic resin of the present invention are carbon fibers for thermoplastic resin to which a (meth)acrylic polymer (A3) has adhered, such (meth)acrylic polymer having the surface atom ratio between nitrogen and carbon (N/C) of 0.001 or more (measured by Electron spectroscopy for chemical analysis) and saturated water absorption of 8% by weight or less at a temperature of 25°C and a humidity of 65%.

In addition, the present inventors have found that mechanical properties of a molded product can be specifically improved and the above objective can be achieved by obtaining such molded product by allowing a polymer having an oxazoline group having the surface atom ratio between nitrogen and carbon (nitrogen atom N/carbon atom C) of 0.001 or more (measured by Electron spectroscopy for chemical analysis) to adhere to carbon fibers and integrating the resultant with thermoplastic resin. This has led to the completion of the present invention.

Specifically, the carbon fibers for thermoplastic resin of the present invention are carbon fibers for thermoplastic resin, to which a polymer having an oxazoline group (A4) has adhered, such polymer (C) having the surface atom ratio between nitrogen and carbon (N/C) of 0.001 or more (measured by Electron spectroscopy for chemical analysis).

## Effects of the Invention

According to the present invention, good interface adhesion between reinforcing fibers and thermoplastic resin can be realized. Thus, a fiber-reinforced thermoplastic resin composition that is significantly superior in mechanical properties such as strength properties and impact-resistant properties can be obtained. A molded product comprising such fiber-reinforced thermoplastic resin composition is preferably used for electric or electronic apparatus, office automation apparatus, parts of electric household appliances or automobiles, internal members, housings, and the like.

## Best Mode for Carrying Out the Invention

### [Fiber-reinforced thermoplastic resin composition]

Hereafter, preferred embodiments of the fiber-reinforced thermoplastic resin composition of the present invention will be described in greater detail.

The fiber-reinforced thermoplastic resin composition of the present invention comprises a (meth)acrylic polymer (A1) having an aminoalkylene group in a side chain (0.1 % to 10% by weight), reinforcing fibers (B) (1% to 70% by weight), and a thermoplastic resin (C) (20% to 98.9% by weight).

In addition, the fiber-reinforced thermoplastic resin composition of the present invention comprises a polymer (A2) having an oxazoline group in a side chain (0.1% to 10% by weight), reinforcing fibers (B) (1% to 70% by weight), and a thermoplastic resin (C) (20% to 98.9% by weight).

### [(Meth)acrylic polymer (A1)]

In view of chemical reactivity with reinforcing fibers (B) and a thermoplastic resin (C), an aminoalkylene group in the (meth)acrylic polymer (A1) used for the present invention is unlikely to be influenced by the restriction of the main chain structure, and thus it is able to move relatively freely. Thus, an amino group is allowed to efficiently react with a functional group of a reinforcing fiber. In addition, with the use of such aminoalkylene group in a side chain, a plurality of amino groups can be provided so that they can efficiently react with functional groups of reinforcing fibers.

The content of (meth)acrylic polymer (A1) is 0.1% to 10% by weight, preferably 0.1% to 8% by weight, and more preferably 0.1% to 5% by weight in the fiber-reinforced thermoplastic resin composition. In a case in which the content of (meth)acrylic polymer (A1) is less than 0.1% by weight, the polymer is not sufficiently provided to reinforcing fibers, which might result in insufficient interface adhesion. In addition, in a case in which the content exceeds 10% by weight, the polymer greatly influences a molded product, which might adversely result in deterioration in mechanical properties.

According to the present invention, a (meth)acrylic polymer referred to as a (meth)acrylic polymer (A1) includes both an acrylic polymer and a methacrylic polymer. Preferably, a (meth)acrylic polymer (A1) having an aminoalkylene group in a side chain, which is used for the present invention, is distributed around reinforcing fibers (B). In addition,

more preferably, a portion of such (meth)acrylic polymer (A1) is in contact with reinforcing fibers (B) for efficient chemical binding therebetween. It is possible to confirm the presence of an acrylic polymer (A1) distributed around reinforcing fibers (B) by, for example: a method comprising cutting out a cross section of molded product, allowing the surface of the cross section to react by a chemical modification method with a halogen group reagent having a functional group that can react with an amino group, analyzing halogen elements by an EPMA (electron probe micro analyzer), and checking the concentration distribution; or a method comprising dyeing a molded product with a heavy metal compound, cutting out an ultrathin section of the product with an ultramicrotome or the like, and carrying out morphology observation of the section with a transmission electron microscope.

Preferably, in terms of reactivity with reinforcing fibers (B) or a thermoplastic resin (C), an aminoalkylene group of a (meth)acrylic polymer (A1) used for the present invention has a primary amine-terminal. This is because a carbon fiber that is used particularly as a reinforcing fiber has a carboxyl group on the surface thereof.

Examples of an aminoalkylene group include an aminomethylene group, an aminoethylene group, an aminopropylene group, and an aminobutylene group. In addition, a primary amine may have a structure such as $-NH_2 \cdot HX$ of a primary amine salt or $-NH_3^+X^-$ of an ammonium salt (where X represents a halogen element such as Cl or Br).

Preferably, a (meth)acrylic polymer (A1) used for the present invention has a structure containing a unit (5 to 100 mol%) represented by the following structural formula (1):

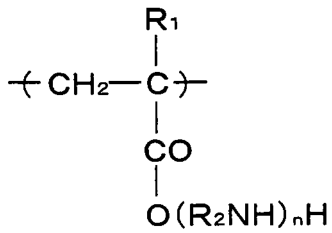

(1)

(where $R_1$ represents -H or $-C_mH_{2m+1}$ (where m represents an integer of 1 or more), $R_2$ represents an alkylene group having a linear or branch structure containing 1 to 5 carbon atoms, and n represents a rational or irrational number of 0.01 to 10, provided that n ranges preferably from 0.05 to 5 and more preferably from 0.08 to 1).

A (meth)acrylic polymer (A1) having a unit represented by the above structural formula (1) can be produced by, for example, carrying out solution polymerization of an unsaturated monomer (5 to 100 mol%) comprising acrylic acid or methacrylic acid and unsaturated monomer (0 to 95 mol%) comprising, as a main component, acrylic ester in an adequate organic solvent and then allowing a carboxyl group existing in the obtained polymer molecule to react with alkyleneimine having an alkylene group having 1 to 5 carbon atoms, such as ethyleneimine or propyleneimine. Herein, n is not limited to an integer because the number of bonds resulting from a reaction has a wide range and thus the number is expressed in the mean value.

An acrylic ester that can be widely used has an alkyl substituent containing 1 to 8 carbon atoms. Specific examples thereof include methyl acrylate, ethyl acrylate, propyl acrylate, n-butyl acrylate, isobutyl acrylate, t-butyl acrylate, hexyl acrylate, octyl acrylate, and 2-ethylhexyl acrylate, and these can be used alone or in mixtures of two or more.

In addition, in view of interface adhesion with reinforcing fibers (B), a (meth)acrylic polymer (A1) used for the present invention has an amine hydrogen equivalent weight of preferably 100 to 1,000 g/eq, more preferably 200 to 800 g/eq, and further preferably 300 to 800 g/eq. When the amine hydrogen equivalent weight is 100 to 1,000 g/eq, it is particularly possible to achieve sufficient interface adhesion with carbon fibers.

In the above structural formula (1), the side chain consists of amino groups with a condition of n = 1. With a condition of n = 2 or more, the side chain comprises imino groups in the chain body and amino groups at the terminal. The amounts of amino groups and imino groups can be shown with amine hydrogen equivalent weights. The amine hydrogen equivalent weights can be calculated with the following equation:

$$\text{Amine hydrogen equivalent weight (g/eq)} = (S_1 \times N \times S_2 \times 4000)/(F \times V \times W)$$

($S_1$: amount of collected sample (g), N: solid content of a sample (% by weight), $S_2$: amount of diluted sample solution collected (g), F: titer of 1/4N-PVSK solution, V: amount of 1/4N-PVSK solution titrated (ml), and W: total weight of diluted sample solution (g)). A PVSK solution indicates a polyvinyl sulfate calcium solution (for colloidal titration; Wako Pure Chemical Industries, Ltd.).

In addition, a (meth)acrylic polymer (A1) used for the present invention has a weight-average molecular weight of preferably 5,000 to 200,000, more preferably 10,000 to 100,000, and further preferably 30,000 to 60,000. When the weight-average molecular weight is 5,000 or more, degradation is suppressed and the strength of (meth)acrylic polymer (A1) itself is increased, resulting in sufficient improvement of the strength of a molded product. When the weight-average molecular weight is 200,000 or less, ease of handling can be further improved.

The weight-average molecular weight of a (meth)acrylic polymer (A1) can be calculated by a standard polystyrene conversion method with the use of gel permeation chromatography (GPC). A column filled with polystyrene crosslinked gel (e.g., shodex GPC K-804; Showa Denko K. K.) can be used as a GPC column. Chloroform can be used as a GPC solvent. [Polymer (A2) having an oxazoline group in a side chain]

A polymer (A2) having an oxazoline group in a side chain used for the present invention chemically binds to both reinforcing fibers (B) and a thermoplastic resin (C). Accordingly, good interface adhesion is obtained and thus a molded product that is excellent in mechanical properties can be obtained.

The content of polymer (A2) having an oxazoline group in a side chain is 0.1 % to 10% by weight, preferably 0.1% to 8% by weight, and more preferably 0.1 % to 5% by weight with respect to the total weight of a fiber-reinforced thermoplastic resin composition. In a case in which the content of polymer (A2) having an oxazoline group in a side chain is less than 0.1% by weight, the polymer is not sufficiently provided to reinforcing fibers, which might result in insufficient interface adhesion. In addition, in a case in which the content exceeds 10% by weight, the polymer greatly influences a molded product, which might adversely result in deterioration in mechanical properties.

Preferably, a polymer (A2) having an oxazoline group in a side chain, which is used for the present invention, is distributed around reinforcing fibers (B). In addition, more preferably, a portion of such polymer (A2) is in contact with reinforcing fibers (B) for efficient chemical binding therebetween. It is possible to confirm the presence of a polymer (A2) having an oxazoline group in a side chain around reinforcing fibers (B) by, for example: a method comprising cutting out a cross section of molded product, allowing the surface of the cross section to react by a chemical modification method with a halogen group reagent having a functional group that can react with an oxazoline group, analyzing halogen elements by an EPMA (electron probe micro analyzer), and checking the concentration distribution; or a method comprising dyeing a molded product with a heavy metal compound, cutting out an ultrathin section of the product with an ultramicrotome or the like, and carrying out morphology observation of the section with a transmission electron microscope.

Preferably, a polymer (A2) having an oxazoline group in a side chain used for the present invention has a structure containing a unit (10 to 100 mol%) represented by the following structual formula (2):

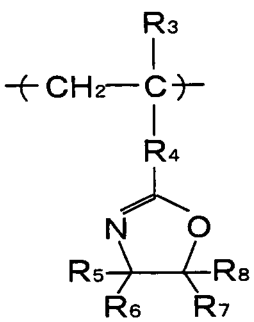

(2)

(where $R_3$ represents a hydrogen or a methyl group, $R_4$ represents an alkylene group having a linear or branch structure containing 0 to 5 carbon atoms, and $R_5$ to $R_8$ represents a hydrogen or an alkyl group containing 1 to 20 carbon atoms).

A polymer (A2) having an oxazoline group in a side chain used for the present invention has many oxazoline groups in a side chain as shown in (formula 2), so that sufficient chemical reactivity with reinforcing fibers can be ensured.

A polymer (A2) having an oxazoline group in a side chain represented by structual formula (2) can be produced by a conventional polymerization method with the use of a vinyl monomer (10 to 100 mol%) having an oxazoline group and a different monomer (a) (0 to 90 mol%).

Specific examples of addition-polymerizable oxazoline include at least one selected from the group consisting of 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline, and these can be used alone or in mixtures of two or more.

Examples of the above monomer (a) in a polymer (A2) having an oxazoline group in a side chain include: (meth)acrylic esters such as methyl (meth)acrylate, butyl (meth)acrylate, 2-ethylhexyl (meth)acrylate, and methoxypolyethylene glycol (meth)acrylate; (meth)acrylic acid salts such as (meth)acrylic acid sodium, (meth)acrylic acid potassium, and (meth)acrylic acid ammonium; unsaturated nitriles such as (meth)acrylonitrile; unsaturated amides such as (meth)acrylamide and N-methylol(meth)acrylamide; vinylesters such as vinyl acetate and vinyl propionate; vinylethers such as methylvinylether and ethylvinylether; α-olefines such as ethylene and propylene; halogen-containing α,β-unsaturated monomers such as vinyl chloride, vinylidene chloride, and vinyl fluoride; and α,β-unsaturated aromatic monomers such as styrene and α-methylstyrene; and these can be used alone or mixtures of two or more.

In addition, in view of interface adhesion with reinforcing fibers (B), the oxazoline equivalent weight of a polymer (A2) having an oxazoline group in a side chain used for the present invention is preferably 200 to 2,000 g/eq. The oxazoline equivalent weight ranges more preferably from 200 to 1500 g/eq, and further preferably from 200 to 1,200 g/eq. When the oxazoline equivalent weight is from 200 to 2,000 g/eq, it is particularly possible to achieve sufficient interface adhesion with carbon fibers.

The term "oxazoline equivalent weight" used herein indicates the molecular weight of a copolymer corresponding to a single oxazoline ring molecule. The oxazoline equivalent weight can be measured by a method comprising lyophilizing an oxazoline-containing polymer solution, analyzing the resultant by $^1$H-NMR, and calculating the oxazoline equivalent weight based on the absorption peak strength derived from an oxazoline group and the absorption peak strength derived from a different monomer.

In addition, the weight-average molecular weight of a polymer (A2) having an oxazoline group in a side chain used for the present invention is preferably 5,000 to 200,000, more preferably 10,000 to 100,000, and further preferably 10,000 to 60,000. When the weight-average molecular weight is 5,000 or more, degradation is suppressed and the strength of polymer (A2) having an oxazoline group in a side chain itself is increased, resulting in sufficient improvement of the strength of a molded product. When weight-average molecular weight is 200,000 or less, ease of handling can be further improved.

The weight-average molecular weight of a oxazoline-group-containing polymer (A2) can be calculated by a standard polystyrene conversion method with the use of gel permeation chromatography (GPC). A column filled with polystyrene crosslinked gel (e.g., shodex GPC K-804; Showa Denko K. K.) can be used as a GPC column. Chloroform can be used as a GPC solvent.

[Reinforcing fibers (B)]

The content of reinforcing fibers (B) used for the present invention is 1% to 70% by weight, preferably 5% to 50% by weight, and more preferably 10% to 40% by weight in a fiber-reinforced thermoplastic resin composition. When the content of reinforcing fibers (B) is less than 1% by weight, sufficient reinforcing effects cannot be obtained from the reinforcing fibers, and thus sufficient mechanical properties cannot be imparted to a molded product. When the content of reinforcing fibers (B) exceeds 70% by weight, thermoplastic resin cannot sufficiently impregnate spaces among reinforcing fibers. As a result, sufficient mechanical properties cannot be obtained.

Preferred examples of reinforcing fibers (B) used for the present invention include: metal fibers comprising aluminium, brass, or stainless steel; polyacrylonitrile, rayon, lignin, or pitch carbon fibers or graphite fibers; organic fibers comprising alamid, PBO, polyphenylene sulfide, polyester, acryl, nylon, or polyethylene; and inorganic fibers comprising glass, basalt, silicon carbide, or silicon nitride; and these can be used alone or in combinations of two ore more.

Among the above examples, in terms of specific strength and specific stiffness, carbon fibers and basalt fibers are preferably used according to the present invention. Further, in terms of conductivity, carbon fibers are more preferably used.

The weight-average fiber length (1w) of carbon fibers contained in a molded product is preferably 0.1 to 10 mm and more preferably 0.2 to 5 mm. When such length is from 0.1 to 10 mm, sufficient mechanical properties can be imparted to a molded product.

The weight-average fiber length (1w) can be calculated by extracting at least 400 carbon fiber filaments alone in a random manner from a molded product and measuring the lengths in μm with an optical microscope or a scanning electron microscope. As a means of removing non-carbon-fiber components for lw measurement, the following method can be applied: a method wherein a molded product is subjected to heating treatment at 500°C × 30 minutes; or a method wherein non-carbon-fiber components alone are dissolved in a solvent and then separated from carbon fibers by filtration or the like.

Regarding carbon fibers, the surface atom ratio between oxygen and carbon (O/C) is preferably 0.05 to 0.5, more preferably 0.06 to 0.3, and further preferably 0.07 to 0.2, provided that such surface oxygen concentration is the proportion of the number of oxygen atoms (O) on the fiber surface to the number of carbon atoms (C) on the fiber surface and is measured by Electron spectroscopy for chemical analysis. When the surface atom ratio between oxygen and carbon (O/C) is 0.05 or more, the amount of polar functional groups on the carbon fiber surface is secured and the affinity with a thermoplastic resin composition is improved, so that strong adhesion can be achieved. In addition, when the surface atom ratio between oxygen and carbon (O/C) is 0.5 or less, a decrease in the strength of a carbon fiber itself caused by surface oxidation can be reduced.

The amount of oxygen-containing functional groups in carbon fibers is determined by the following procedures

based on Electron spectroscopy for chemical analysis. First, carbon fibers, from which a sizing agent and the like adhering to the carbon fiber surfaces have been removed using a solvent, are cut to 20 mm in length and placed and extended on a copper-made sample support. Thereafter, a sample chamber is maintained at $1 \times 10^8$ Torr, and AlK$\alpha$1, 2 are used as an X-ray source. The value of the kinetic energy (K.E.) of the main peak of $C_{1s}$ is adjusted to 1202 eV, and thus used as a correction value for a peak that appears upon charging. The $C_{1S}$ peak area (in terms of K.E.) is obtained by calculating the integral of a peak line formed with the $C_{1S}$ peak line and a straight baseline drawing from 1191 to 1205 eV. The $O_{1s}$ peak area (in terms of K.E.) is obtained by calculating the integral of a peak line formed with the $O_{1s}$ peak line and a straight baseline drawing from 947 to 959 eV.

Herein, the amount of oxygen-containing functional groups is calculated in terms of the atomic proportion with the use of a sensibility correction value specific to an apparatus based on the proportion of the above $O_{1s}$ peak area to the $C_{1s}$ peak area. The X-ray photoelectron spectroscope used was an ES-200 model (Kokusai Denkisya). The sensibility correction value was determined to be 1.74.

A means of controlling the surface atom ratio between oxygen and carbon (O/C) to 0.05 to 0.5 is not particularly limited. However, techniques involving electrolytic oxidation treatment, chemical oxidation treatment, and vapor-phase oxidation treatment can be used. In particular, electrolytic oxidation treatment is preferably used in terms of ease of handling.

Preferred examples of an electrolyte used for electrolytic treatment include: aqueous solutions of inorganic acids such as sulfuric acid, nitric acid, and hydrochloric acid, inorganic hydroxides such as sodium hydroxide, potassium hydroxide, and barium hydroxide, inorganic salts such as ammonia, sodium carbonate, and sodium bicarbonate, and organic salts such as sodium acetate and sodium benzoate; potassium salts, barium salts, other metal salts, and ammonium salts of the above examples; and organic compounds such as hydrazine. Among them, preferably, an inorganic acid, and particularly preferably, sulfuric acid or nitric acid is used for an electrolyte. Regarding the level of electrolytic treatment, the O/C on the carbon fiber surface can be controlled by predetermining the quantity of electricity that flows upon electrolytic treatment.

In addition, the strand strength of carbon fibers or graphitized fibers used for the present invention is preferably 3 to 8 GPa and more preferably 4 to 7 GPa. Also, carbon fibers or graphitized fibers having a strand elastic modulus of 200 to 500 GPa can be preferably used.

The above strand strength can be obtained by impregnating a resin having the following composition into a bundle of carbon fibers or graphitized fibers, performing curing at 130°C for 35 minutes, and then carrying out a tensile test method according to JIS R-7601 (1986).

| | |
|---|---|
| (Resin composition) | |
| Cycloaliphatic epoxy resin (3,4-epoxycyclohexylmethyl-3,4-epoxy-cyclohexyl -carboxylate) | 100 parts by weight |
| Boron trifluoride monoethylamine | 3 parts by weight |
| Acetone | 4 parts by weight |

Further, the strand elastic modulus can be obtained by carrying out a tensile test in a manner similar to the above strand strength measurement method and referring to a load-extension slope.

Furthermore, at least one composition selected from urethane resin, acrylic resin, epoxy resin, polyamide resin, and surfactants may adhere to reinforcing fibers (B) used for the present invention. By allowing a composition to adhere to reinforcing fibers (B) as above, it becomes possible to improve the convergence property of fiber bundle of reinforcing fibers and to inhibit scuffing, particularly upon handling.

A composition can be applied to reinforcing fibers by immersing such fibers in a solution obtained by dissolving the composition in a solvent or in a dispersion solution obtained by dispersing the composition in a dispersion medium and drying the fibers. (It is preferable to immerse such reinforcing fibers in a sizing agent).

The amount of a composition that is allowed to adhere to reinforcing fibers (B) is preferably 0.1% to 5% by weight and more preferably 0.5% to 3% by weight with respect to the total weight of reinforcing fibers (B).

In addition, the number of filament of carbon fibers (B) used for the present invention is preferably 1,000 to 70,000 and more preferably 12,000 to 48,000.

The form of reinforcing fibers (B) used for the present invention is not particularly limited. However, sheet-type fabric such as continuous fiber, woven cloth, web, nonwoven cloth, felt, or mat is preferably used.

The reinforcing fibers (B) used for the present invention can be cut to 1 to 60 mm in length before use. Preferably, the length is 3 to 50 mm. When the length is from 1 to 60 mm, both reinforcing effects and molding liquidity upon molding can be obtained.

The form of reinforcing fibers (B) used for the present invention is not particularly limited. However, sheet-type fabric such as knitted fabric, woven cloth, web, nonwoven cloth, felt, or mat can be preferably used.

[Thermoplastic resin (C)]

The content of thermoplastic resin (C) used for the present invention is 20% to 98.9% by weight, preferably 40% to 90% by weight, and more preferably 50% to 80% by weight with respect to the total weight of a fiber-reinforced resin composition. When the content of thermoplastic resin (C) is less than 20% by weight, thermoplastic resin cannot sufficiently impregnate spaces among reinforcing fibers. As a result, mechanical properties of a molded product deteriorate.

Examples of a thermoplastic resin (C) used for the present invention include: polyesters such as polyethylene terephthalate (PET), polybutylene terephthalate (PBT), polytrimethylene terephthalate (PTT), polyethylene naphthalate (PEN), and liquid crystal polyester; polyolefins such as polyethylene (PE), polypropylene (PP), and polybutylene; styrene resin; polyoxymethylene (POM), polyamide (PA), polycarbonate (PC), polymethylene methacrylate (PMMA), polyvinyl chloride (PVC), polyphenylene sulfide (PPS), polyphenylene ether (PPE), modified PPE, polyimide (PI), polyamideimide (PAI), polyetherimide (PEI), polysulfone (PSU), modified PSU, polyethersulfone (PES), polyketone (PK), polyetherketone (PEK), polyetheretherketone (PEEK), polyetherketoneketone (PEKK), polyallylate (PAR), polyethernitrile (PEN), phenol resin, phenoxy resin ; fluorine resin such as polytetrafluoroethylene; thermoplastic elastomers comprising polystyrene, polyolefin, polyurethane, polyester, polyamide, polybutadiene, polyisoprene, fluorine, and the like; copolymers and modified resins of the above examples; and resin obtained by blending two or more of the above examples. In terms of cost and versatility in general industry, at least one selected from the group consisting of polyester resin, polyolefin resin, polyamide resin, polycarbonate resin, and polyetherimide resin is particularly preferably used. Further preferably, polyolefin resin is used.

In the case of polyolefin resin, modified polyolefin resin comprising at least one functional group selected from the group consisting of a carboxyl group, an acid anhydride group, and an epoxy group is preferable in terms of reactivity with an amino group of an acrylic polymer (A1) having an aminoalkylene group in a side chain or an oxazoline group of a polymer (A2) having an oxazoline group in a side chain.

Specific examples of modified polyolefin include (anhydrous) maleic acid-modified polyethylene, a (anhydrous) maleic acid-modified ethylene-propylene copolymer, a (anhydrous) maleic acid-modified ethylene-vinyl acetate copolymer, (anhydrous) maleic acid-modified polypropylene, a (anhydrous) maleic acid-modified propylene-ethylene copolymer, glycidyl (meth)acrylate-modified polyethylene, a glycidyl (meth)acrylate-modified ethylene-propylene copolymer, a glycidyl (meth)acrylate-modified ethylene-vinyl acetate copolymer, 2-hydroxyethyl (meth)acrylate-modified polyethylene, a 2-hydroxyethyl (meth)acrylate-modified ethylene-propylene copolymer, and a 2-hydroxyethyl (meth)acrylate-modified ethylene-vinyl acetate copolymer. In addition, examples of a copolymer include an ethylene-(meth)acrylic acid copolymer, an ethylene-2-hydroxyethyl(meth)acrylate copolymer, an ethylene-glycidyl(meth)acrylate copolymer, an ethylene-polyethyleneglycol mono(meth)acrylate copolymer, an ethylene-vinyl acetate-(meth)acrylic acid copolymer, an ethylene-ethyl(meth)acrylate-(anhydrous) maleic acid copolymer, an ethylene-vinyl acetate-(anhydrous) maleic acid copolymer, an ethylene-vinyl acetate-2-hydroxyethyl(meth)acrylate copolymer, an ethylene-vinyl acetate-glycidyl(meth) acrylate copolymer, an ethylene-vinyl acetate-polyethyleneglycol mono(meth)acrylate copolymer, and a partially saponificated product of an ethylene-vinyl acetate copolymer. Particularly preferably, a modified product such as (anhydrous) maleic acid-modified polypropylene, a (anhydrous) maleic acid-modified ethylene-propylene copolymer, or glycidyl(meth) acrylate-modified polypropylene is used.

[Polymer (D)]

Further, according to the present invention, in terms of interface adhesion, it is possible to allow a fiber-reinforced thermoplastic resin composition to contain a polymer (D) (0% to 10% by weight) comprising at least one functional group selected from the group consisting of a carboxyl group, an acid anhydride group, and an epoxy group. The content of polymer (D) is more preferably 0.01 % to 8% by weight and further preferably 0.01% to 5% by weight. The above functional group easily reacts with an amino group in a (meth)acrylic polymer (A1), and thus it has effects of enhancing adhesivity between reinforcing fibers and thermoplastic resin.

In addition, in terms of interface adhesion between reinforcing fibers and thermoplastic resin, an acid value or an epoxy value of a polymer (D) is preferably 10 to 500 mg KOH/g, and more preferably 20 to 300 mg KOH/g, and further preferably 30 to 200 mg KOH/g.

The acid value was evaluated in the following manner. A polymer (D) is dissolved in a neutral solvent such as acetone or DMF, followed by titration with a 0.1 N potassium hydroxide-ethanol standard solution. Then, the acid value is obtained by the following equation. Note that the acid value of acid anhydride-modified thermoplastic resin is measured after released acids are obtained by hydrolysis of acid anhydride groups.

$$\text{Acid value} = (5.611 \times A \times F)/B$$

A: Amount of 0.1 N potassium hydroxide-ethanol standard solution used (ml)
F: Factor of 0.1 N potassium hydroxide-ethanol standard solution
B: Amount of sample collected (g)

Also, the epoxy value was obtained by mg conversion by multiplying the reciprocal number of the epoxy equivalent weight (weight of sample containing 1 equivalent weight of an epoxy group) measured according to JIS K7236 (2001) with the molecular weight of potassium hydroxide (56).

In addition, the weight-average molecular weight of polymer (D) used for the present invention is preferably 5,000 to 100,000, more preferably 10,000 to 80,000, and further preferably 20,000 to 60,000. When the weight-average molecular weight of polymer (D) is 5,000 or more, degradation is suppressed and the strength of polymer (D) itself is increased, resulting in sufficient improvement of the strength of a molded product. When the weight-average molecular weight is 100,000 or less, ease of handling can be further improved.

The weight-average molecular weight of polymer (D) can be calculated by a standard polystyrene conversion method with the use of gel permeation chromatography (GPC). A column filled with polystyrene crosslinked gel (e.g., shodex GPC K-804; Showa Denko K. K.) is used as a GPC column. Chloroform is used as a GPC solvent.

Preferred examples of a polymer (D) that can be used for the present invention include a copolymer of polyolefin and a denaturing agent , and a polyolefin polymer obtained by graft polymerization of polyolefin and a denaturing agent. Examples of a denaturing agent include a monomer having a carboxyl group or an acid anhydride group (e.g., (meth) acrylic acid, crotonic acid, maleic acid, anhydrous maleic acid, and fumaric acid) and a monomer having a glycidyl group and an epoxy group (e.g., glycidyl(meth)acrylate).

Specific examples of a polymer (D) used for the present invention include (anhydrous) maleic acid-modified polyethylene, a (anhydrous) maleic acid-modified ethylene-propylene copolymer, a (anhydrous) maleic acid-modified ethylene-vinyl acetate copolymer, (anhydrous) maleic acid-modified polypropylene, a (anhydrous) maleic acid-modified propylene-ethylene copolymer, glycidyl(meth)acrylate-modified polyethylene, a glycidyl(meth)acrylate-modified ethylene-propylene copolymer, a glycidyl(meth)acrylate-modified ethylene-vinyl acetate copolymer, 2-hydroxyethyl(meth) acrylate-modified polyethylene, a 2-hydroxyethyl(meth)acrylate-modified ethylene-propylene copolymer, and a 2-hydroxyethyl(meth)acrylate-modified ethylene-vinyl acetate copolymer. In addition, examples of a copolymer include an ethylene-(meth)acrylic acid copolymer, an ethylene-2-hydroxyethyl(meth)acrylate copolymer, an ethylene-glycidyl(meth) acrylate copolymer, an ethylene-polyethyleneglycol mono(meth)acrylate copolymer, an ethylene-vinyl acetate-(meth) acrylic acid copolymer, an ethylene-ethyl(meth)acrylate-(anhydrous) maleic acid copolymer, an ethylene-vinyl acetate-(anhydrous) maleic acid copolymer, an ethylene-vinyl acetate-2-hydroxyethyl(meth)acrylate copolymer, an ethylene-vinyl acetate-glycidyl(meth)acrylate copolymer, an ethylene-vinyl acetate-polyethyleneglycol mono(meth)acrylate copolymer, and a partially saponificated product of an ethylene-vinyl acetate copolymer. Particularly preferably, modified products such as (anhydrous) maleic acid-modified polypropylene, a (anhydrous) maleic acid-modified ethylene-propylene copolymer, and glycidyl(meth)acrylate-modified polypropylene can be used.

In addition, a polymer (D) used for the present invention preferably has a property selected from among water solubility, suspensibility, and emulsifiability.

Examples of a solvent in which a polymer (D) is dissolved include water, methanol, ethanol, dimethyl formamide, dimethyl acetamide, and acetone. Preferably, water is used in terms of ease of handling and fire prevention.

[Fillers, additives, and the like]

The fiber-reinforced thermoplastic resin composition of the present invention may contain other components in addition to the above examples depending on applications and the like, as long as such components do not adversely influence mechanical properties. In addition, fillers, additives, and the like may be contained. Examples of fillers or additives include inorganic fillers, fire retardants, conductivity-imparting agents, crystal nucleus agents, UV absorbents, antioxidants, vibration dampers, antibacterial agents, insecticides, deodorants, color protectors, thermal stabilizers, release agents, antistatic agents, plasticizers, lubricants, colorants, pigments, foaming agents, and coupling agents.

In particular, addition of a fire retardant for applications that require flame retardancy and addition of a conductivity-imparting agent for applications that require conductivity can be preferably adapted. Examples of a fire retardant that can be used include fire retardants such as a halogen compound, an antimony compound, a phosphorus compound, a nitrogen compound, a silicon compound, a fluorine compound, a phenol compound, and a metal hydroxide. In terms of reduction of environmental burdens, phosphorus compounds such as ammonium polyphosphate, polyphosphazene, phosphate, phosphonate, phosphinate, phosphine oxide, and red phosphorus are preferably used.

Examples of a conductivity-imparting agent that can be used include carbon black, amorphous carbon powder,

natural graphite powder, artificial graphite powder, expanded graphite powder, pitch microbeads, vapor-phase carbon fiber, and carbon nanotubes.

[Method for producing a fiber-reinforced thermoplastic resin composition]

Next, a method for producing the fiber-reinforced thermoplastic resin composition of the present invention will be described. A 1st method for producing the fiber-reinforced thermoplastic resin composition of the present invention involves at least the following steps 1a, 2a, and 3a:

step 1a of applying a (meth)acrylic polymer (A1) having an aminoalkylene group in a side chain or a polymer (A2) having an oxazoline group in a side chain (0.1 % to 10% by weight) to reinforcing fibers (B) (1% to 70% by weight);
step 2a of melting a thermoplastic resin (C); and
step 3a of mixing the reinforcing fibers obtained in step 1a with the thermoplastic resin melted in step 2a and integrating the resultant with a thermoplastic resin (C) (20% to 98.9% by weight).

In addition, a 2nd method for producing the fiber-reinforced thermoplastic resin composition of the present invention involves at least the following steps 1b, 2b, and 3b:

step 1b of processing reinforcing fibers (B) into sheet-type fabric such as knitted fabric, woven cloth, web , nonwoven cloth, felt, or mat;
step 2b of applying a (meth)acrylic polymer (A1) having an aminoalkylene group in a side chain or a polymer (A2) having an oxazoline group in a side chain (0.1% to 10% by weight) to the fabric (1% to 70% by weight) obtained in step 1b; and
step 3b of applying a thermoplastic resin (C) (20% to 98.9% by weight) to the fabric to which a (meth)acrylic polymer (A1) having an aminoalkylene group in a side chain or a polymer (A2) having an oxazoline group in a side chain has been added in step 2b and integrating the resultant by heat melting.

In the above step 1b, a conventional method is used as a method for processing reinforcing fibers (B) into fabric such as knitted fabric, woven cloth, web, nonwoven cloth, felt, or mat.

In the above step 1b, a portion of a thermoplastic resin (C) (e.g., 0% to 50% by weight and preferably 5% to 40% by weight) may be mixed in advance with reinforcing fibers (B).

A thermoplastic resin (C) used for the present invention is preferably in a particle, film, or nonwoven cloth form.

As a method for applying a (meth)acrylic polymer (A1) having an aminoalkylene group in a side chain or a polymer (A2) having an oxazoline group in a side chain in the above steps 2a and 2b, a method comprising allowing such polymer in an aqueous solution or water dispersion form to adhere to reinforcing fibers (B) and then evaporating a solvent is preferably used. Specifically, a conventional method such as a spray method or a dipping method is used.

Further, in the above steps 2a and 2b, the above polymer (D) may be applied, followed by application of a (meth)acrylic polymer (A1) having an aminoalkylene group in a side chain or a polymer (A2) having an oxazoline group in a side chain. As a method for applying a polymer (D), a method comprising allowing such polymer in an aqueous solution or water dispersion form to adhere to reinforcing fibers (B) and then evaporating a solvent is preferably used. Specifically, as with the case of a (meth)acrylic polymer (A1) having an aminoalkylene group in a side chain or a polymer (A2) having an oxazoline group in a side chain, a spray method, a dipping method, or the like is used.

In the above steps 2a and 2b, after a polymer (D) is applied, followed by application of a (meth)acrylic polymer (A1) having an aminoalkylene group in a side chain or a polymer (A2) having an oxazoline group in a side chain, hot-air drying may be carried out at 100°C to 200°C for 0.1 to 90 minutes according to need.

In the above step 3b, specific examples of a method for applying a thermoplastic resin (C) by heat melting include: a method comprising sandwiching a thermoplastic resin (C) in a film or nonwoven cloth form with the fabric obtained in step 2b and then carrying out impregnation by heating and pressurization with the use of a double belt press or a plate press; and a method comprising causing thermoplastic resin in a particle form to impregnate the fabric obtained in step 2b and then carrying out impregnation by heating and pressurization with the use of a double belt press or a plate press.

A fiber-reinforced thermoplastic resin composition obtained by the above step 3b (integrating step) is in a stampable sheet or prepreg form, for example. Further, pellets or flakes can be obtained by cutting such sheet or prepreg, and thus they can be used for general injection molding.

[Carbon fibers for thermoplastic resin]

Hereafter, preferred embodiments of the carbon fibers for thermoplastic resin of the present invention will be

described in greater detail.

The carbon fibers for thermoplastic resin of the present invention are carbon fibers to which a (meth)acrylic polymer (A3) has adhered. Such (meth)acrylic polymer (A3) is a polymer having an elemental proportion (nitrogen atom N/carbon atom C) of 0.001 or more measured by Electron spectroscopy for chemical analysis and saturated water absorption of 8% by weight or less at a temperature of 25°C and a humidity of 65%.

In addition, the carbon fibers for thermoplastic resin of the present invention are carbon fibers to which a polymer having an oxazoline group (A4) has adhered. Such oxazoline-group-containing polymer (A4) has the surface atom ratio between nitrogen and carbon (nitrogen atom N/carbon atom C) of 0.001 or more, measured by Electron spectroscopy for chemical analysis.

[(Meth)acrylic polymer (A3)]

A (meth)acrylic polymer (A3) constituting the carbon fibers for thermoplastic resin of the present invention must contain highly polarized nitrogen atoms (nitrogen atoms/carbon atoms: 0.001). Accordingly, the affinity of such polymer to a carbon fiber surface functional group described below is improved, resulting in the improvement of mechanical properties of thermoplastic resin. The above elemental proportion (N/C) is preferably from 0.005 to 0.6 and more preferably from 0.01 to 0.6. When the surface atom ratio between nitrogen and carbon (N/C) is less than 0.001, the affinity of the polymer to a carbon fiber surface functional group deteriorates, resulting in deterioration of the mechanical properties of a molded product.

In general, a carbon fiber surface functional group is a functional group that is formed during a surface oxidation treatment carried out on a carbon fiber surface for the improvement of wettability with thermoplastic resin serving as matrix resin. Specific examples thereof include a hydroxyl group, a carboxyl group, and a carbonyl group.

Nitrogen atoms in a (meth)acrylic polymer (A3) used for the present invention are preferably contained in a reactive functional group. Specific examples of a compound containing nitrogen atoms include amine, imine, enamine, oxazoline, nitrile, and nitro compounds.

With the use of a (meth)acrylic polymer (A3) used for the present invention, coating of carbon fiber surfaces can be readily carried out. As a result of such coating, it becomes possible to prevent a (meth)acrylic polymer (A3) from dispersing in thermoplastic resin serving as matrix resin during molding. According to the present invention, a (meth) acrylic polymer (A3) includes both an acrylic polymer and a methacrylic polymer.

In addition, according to the present invention, the term "(meth)acrylic acid" indicates acrylic acid or methacrylic acid. Also, the term "(meth)acrylate" indicates acrylate or methacrylate.

In addition, a (meth)acrylic polymer (A3) constituting the carbon fiber for thermoplastic resin of the present invention must have saturated water absorption of 8% by weight or less at a temperature of 25°C and a humidity of 65%. The saturated water absorption is preferably from 0% by weight to 6% by weight and more preferably from 0% by weight to 4% by weight. When the saturated water absorption is 8% by weight or less, sufficient mechanical properties can be imparted to a molded product.

Preferably, a (meth)acrylic polymer (A3) used for the present invention has an aminoalkylene group in a side chain. An aminoalkylene group is unlikely to be influenced by the restriction of the main chain structure, and thus it is able to move relatively freely. Thus, an amino group is allowed to efficiently react with a functional group of reinforcing fiber. In addition, with the use of such aminoalkylene group in a side chain, a plurality of amino groups can be provided and thus they can efficiently react with functional groups of reinforcing fibers.

Preferably, an aminoalkylene group of a (meth)acrylic polymer (A3) used for the present invention has the terminal with a primary amine structure. This is because a carbon fiber has a carboxyl group on the surface thereof.

Examples of an aminoalkylene group include an aminomethylene group, an aminoethylene group, an aminopropylene group, and an aminobutylene group. In addition, a primary amine may have a structure such as $-NH_2 \cdot HX$ of a primary amine salt or $-NH_3^+X^-$ of an ammonium salt (where X represents a halogen element such as Cl or Br).

Preferably, a (meth)acrylic polymer (A3) used for the present invention has a structure containing a unit (5 to 100 mol%) represented by the following structural formula (3):

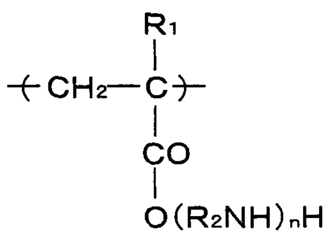

(3)

(where $R_1$ represents -H or $-C_mH_{2m+1}$ (where m represents an integer of 1 or more), $R_2$ represents an alkylene group having a linear or branch structure containing 1 to 5 carbon atoms, and n represents a rational or irrational number of 0.01 to 10, provided that n ranges preferably from 0.05 to 5 and more preferably from 0.08 to 1).

A (meth)acrylic polymer (A3) having a unit represented by the above structural formula (3) can be produced by, for example, carrying out solution polymerization of an unsaturated monomer (5 to 100 mol%) comprising acrylic acid or methacrylic acid and unsaturated monomer (0 to 95 mol%) comprising, as a main component, acrylic ester in an adequate organic solvent and allowing a carboxyl group existing in a produced polymer molecule to react with alkyleneimine having an alkylene group having 1 to 5 carbon atoms, such as ethyleneimine or propyleneimine. Herein, n is not limited to an integer because the number of bonds resulting from reaction has a wide range and thus the number is expressed in the mean value.

An acrylic ester that can be widely used has an alkyl substituent containing 1 to 8 carbon atoms. Specific examples thereof include methyl acrylate, ethyl acrylate, propyl acrylate, n-butyl acrylate, isobutyl acrylate, t-butyl acrylate, hexyl acrylate, octyl acrylate, and 2-ethylhexyl acrylate, and these can be used alone or in mixtures of two or more.

In addition, in view of interface adhesion with reinforcing fibers, a (meth)acrylic polymer (A3) used for the present invention has an amine hydrogen equivalent weight of preferably 100 to 1,000 g/eq, more preferably from 200 to 800 g/eq, and further preferably from 300 to 800 g/eq. When the amine hydrogen equivalent weight is from 100 to 1,000 g/eq, it is particularly possible to achieve sufficient interface adhesion with carbon fibers.

In the above structural formula (3), the side chain consists of amino groups with a condition of n = 1. With a condition of n = 2 or more, the side chain comprises imino groups in the chain body and amino groups at the terminal. The amounts of amino groups and imino groups can be shown with amine hydrogen equivalent weights. The amine hydrogen equivalent weights can be calculated with the following equation:

$$\text{Amine hydrogen equivalent weight (g/eq)} = (S_1 \times N \times S_2 \times 4000)/(F \times V \times W)$$

In addition, the weight-average molecular weight of a (meth)acrylic polymer (A3) used for the present invention is preferably 5,000 to 200,000, more preferably 10,000 to 100,000, and further preferably 30,000 to 60,000. When the weight-average molecular weight is 5,000 or more, degradation is suppressed and the strength of a (meth)acrylic polymer (A1) itself is increased, resulting in sufficient improvement of the strength of a molded product. When weight-average molecular weight is 200,000 or less, ease of handling can be further improved.

The weight-average molecular weight of a (meth)acrylic polymer (A3) can be calculated by a standard polystyrene conversion method with the use of gel permeation chromatography (GPC). A column filled with polystyrene crosslinked gel (e.g., shodex GPC K-804; Showa Denko K. K.) can be used as a GPC column. Chloroform can be used as a GPC solvent.

In addition, in terms of coating of carbon fiber surfaces, the amount of an adhering (meth)acrylic polymer (A3) used for the present invention is 0.1 to 20 parts by weight, preferably 0.1 to 10 parts by weight, and further preferably 0.1 to 5 parts by weight with respect to 100 parts by weight of carbon fibers. In a case in which the amount is less than 0.1 part by weight, the polymer is not sufficiently provided to reinforcing fibers, which might result in insufficient interface adhesion. In addition, in a case in which the amount exceeds 20 parts by weight, the polymer greatly influences a molded product, which might adversely result in deterioration in mechanical properties.

A (meth)acrylic polymer (A3) used for the present invention has functions of enhancing adhesivity between carbon fibers and thermoplastic resin and of improving the convergence property of fiber bundle of carbon fibers. Such polymer is applied, as a component of a sizing agent, to carbon fiber surfaces.

In addition, a (meth)acrylic polymer (A3) used for the present invention preferably has a property selected from among water solubility, suspensibility, and emulsifiability in terms of safety and environmental matters. That is, a (meth) acrylic polymer (A3) having water solubility, suspensibility, or emulsifiability can be applied to carbon fibers in an aqueous system (an aqueous solution or water-suspended or -emulsified dispersion). Accordingly, evaporation of an organic solvent does not occur during a process for applying such polymer to carbon fibers, and there is no risk of ignition or environmental contamination.

[Oxazoline-group-containing polymer (A4)]

A polymer having an oxazoline group (A4) constituting the carbon fibers for thermoplastic resin of the present

invention must contain an oxazoline group and must have the surface atom ratio between nitrogen and carbon (N/C) of nitrogen atom N to carbon atom C of 0.001 or more. Thus, the affinity of such polymer to a carbon fiber surface functional group described below is improved, resulting in the improvement of mechanical properties of thermoplastic resin. The above surface atom ratio between nitrogen and carbon (N/C) is preferably from 0.005 to 0.6 and more preferably from 0.01 to 0.6. When the surface atom ratio between nitrogen and carbon (N/C) is less than 0.001, the affinity of the polymer to a carbon fiber surface functional group deteriorates, resulting in deterioration of the mechanical properties of a molded product.

In addition, in terms of adhesivity between carbon fibers and thermoplastic resin, the saturated water absorption of a polymer having an oxazoline group (A4) constituting the carbon fibers for thermoplastic resin of the present invention is preferably 8% by weight or less at a temperature of 25°C and a humidity of 65%. The saturated water absorption is more preferably from 0% to 6% by weight and further preferably from 0% to 4% by weight. When the saturated water absorption is 8% by weight or less, sufficient mechanical properties can be imparted to a molded product.

A polymer having an oxazoline group (A4) used for the present invention has high chemical reactivity with carbon fibers and a thermoplastic resin (C). Accordingly, good interface adhesion is obtained, and thus a molded product that is excellent in mechanical properties can be obtained.

Preferably, a polymer having an oxazoline group (A4) used for the present invention has a structure containing a unit (10 to 100 mol%) represented by the following structural formula (4):

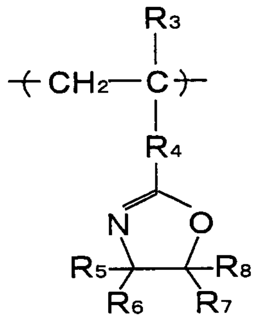

(4)

(where $R_3$ represents a hydrogen or a methyl group, $R_4$ represents an alkylene group having a linear or branch structure containing 0 to 5 carbon atoms, and $R_5$ to $R_8$ represents a hydrogen or an alkyl group containing 1 to 20 carbon atoms).

A oxazoline-group-containing polymer (A4) used for the present invention has many oxazoline groups in a side chain as described in formula (4), so that sufficient chemical reactivity with carbon fibers can be secured.

A oxazoline-group-containing polymer (A4) containing a unit represented by structual formula (4) can be produced by a conventional polymerization method with the use of a vinyl monomer (10 to 100 mol%) having an oxazoline group and a different monomer (a) (0 to 90 mol%).

Specific examples of addition-polymerizable oxazoline include at least one selected from the group consisting of 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline, and these can be used alone or in mixtures of two or more.

Examples of the above monomer (a) in a polymer (A4) having an oxazoline group in a side chain include: (meth)acrylic esters such as methyl (meth)acrylate, butyl (meth)acrylate, 2-ethylhexyl (meth)acrylate, and methoxypolyethylene glycol (meth)acrylate; (meth)acrylic acid salts such as (meth)acrylic acid sodium, (meth)acrylic acid potassium, and (meth)acrylic acid ammonium; unsaturated nitriles such as (meth)acrylonitrile; unsaturated amides such as (meth) acrylamide and N-methylol(meth)acrylamide; vinylesters such as vinyl acetate and vinyl propionate; vinylethers such as methylvinylether and ethylvinylether; α-olefines such as ethylene and propylene; halogen-containing α,β-unsaturated monomers such as vinyl chloride, vinylidene chloride, and vinyl fluoride; and α,β-unsaturated aromatic monomers such as styrene and α-methylstyrene; and these can be used alone or mixtures of two or more.

In addition, in terms of interface adhesion with carbon fibers, the oxazoline equivalent weight of a polymer having an oxazoline group (A4) used for the present invention is preferably 200 to 2,000 g/eq. The oxazoline equivalent weight ranges more preferably from 200 to 1500 g/eq and further preferably from 200 to 1,200 g/eq. When the oxazoline equivalent weight is from 200 to 2,000 g/eq, it is particularly possible to achieve sufficient interface adhesion with carbon fibers.

The term "oxazoline equivalent weight" used herein indicates the molecular weight of a copolymer corresponding to a single oxazoline ring molecule. An oxazoline equivalent weight can be measured by a method comprising lyophilizing an oxazoline-containing polymer solution, analyzing the resultant by $^1$H-NMR, and calculating an oxazoline equivalent

weight based on the absorption peak strength derived from an oxazoline group and the absorption peak strength derived from a different monomer.

In addition, the weight-average molecular weight of a polymer having an oxazoline group (A4) used for the present invention is preferably 5,000 to 200,000, more preferably 10,000 to 100,000, and further preferably 10,000 to 60,000. When the weight-average molecular weight is 5,000 or more, degradation is suppressed and the strength of oxazoline-group-containing polymer (A2) itself is increased, resulting in sufficient improvement of the strength of a molded product. When the weight-average molecular weight is 200,000 or less, ease of handling can be further improved.

The weight-average molecular weight of a polymer having an oxazoline group (A4) can be calculated by a standard polystyrene conversion method with the use of gel permeation chromatography (GPC). A column filled with polystyrene crosslinked gel (e.g., shodex GPC K-804; Showa Denko K. K.) is used as a GPC column. Chloroform is used as a GPC solvent.

In addition, in terms of coating of carbon fiber surfaces, the amount of an adhering (meth)acrylic polymer (A3) used for the present invention is 0.1 to 20 parts by weight, preferably 0.1 to 10 parts by weight, and further preferably 0.1 to 5 parts by weight with respect to 100 parts by weight of carbon fiber.

A oxazoline-group-containing polymer (A4) used for the present invention has functions of enhancing adhesivity between carbon fibers and thermoplastic resin and of improving the convergence property of fiber bundle of carbon fibers. Such polymer is applied, as a component of a sizing agent, to carbon fiber surfaces.

In addition, a polymer having an oxazoline group (A4) used for the present invention preferably has a property selected from among water solubility, suspensibility, and emulsifiability in view of safety and environmental matters. That is, a polymer having an oxazoline group (A4) having water solubility, suspensibility, or emulsifiability can be applied to carbon fibers in an aqueous system (an aqueous solution or water-suspended or -emulsified dispersion). Accordingly, evaporation of an organic solvent does not occur during a process for applying such polymer to carbon fibers and, there is no risk of ignition or environmental contamination.

[N/C measurement method]

According to the present invention, the surface atom ratio between nitrogen and carbon (N/C) measured by Electron spectroscopy for chemical analysis described above is determined by the following method.

First, the solid content of a (meth)acrylic polymer (A3) or a polymer having an oxazoline group (A4) is placed and extended on a stainless-steel-made sample support. Thereafter, a sample chamber is maintained at a degree of vacuum of $1 \times 10^8$ Torr, and $MgK\alpha_{1,2}$ are used as an X-ray source with a photoelectron exit angle of 90°. The value of the binding energy of the main peak of $C_{1S}$ is adjusted to 284.6 eV, and thus used as a correction value for a peak that appears upon charging during measurement. The $C_{1S}$ peak area is obtained by drawing a straight baseline from 282 to 296 eV. The $N_{1S}$ peak area is obtained by drawing a straight baseline from 398 to 410 eV. The surface atom ratio between nitrogen and carbon N/C is derived from a proportion of atoms (nitrogen atom N:carbon atom C) that is calculated by dividing a proportion of the $N_{1S}$ peak area to the $C_{1S}$ peak area with the sensibility correction value specific to an apparatus. In addition, in the Examples of the present invention, an ESCA-750 (Shimadzu Corporation) was used. The sensibility correction value specific to the apparatus was 1.7.

[Saturated water absorption]

In addition, according to the present invention, the aforementioned saturated water absorption is measured by the following method.

A sample (an acrylic polymer (A3) or a polymer having an oxazoline group (A4)) (approximately 10 g) is collected, followed by drying at a temperature of 80°C under reduced pressure for 12 hours. Then, the weight is precisely measured (weight A). Thereafter, the resultant is allowed to stand under conditions of a temperature of 26°C and a humidity of 65% until a stable weight is obtained. The weight that has increased from the original weight of the sample (weight B) is precisely measured , followed by calculation with the following equation:

$$\text{Saturated water absorption (\%)} = 100 \times \text{weight B/weight A}$$

[Carbon fibers]

In terms of reactivity of carbon fibers used for the present invention with a (meth)acrylic polymer (A3) or a polymer having an oxazoline group (A4), the surface atom ratio between oxygen and carbon (oxygen atom O/carbon atom C) of the carbon fibers, which is measured by Electron spectroscopy for chemical analysis, is preferably from 0.05

to 0.50. Also, the surface atom ratio between carbons in carboxyl group and a total quantity of carbons (carboxyl group COOH/carbon atom C) of the carbon fibers, which is measured by Electron spectroscopy for chemical analysis with chemical modification, is preferably from 1% to 5%.

The surface atom ratio between oxygen and carbon (O/C) is more preferably from 0.05 to 0.40 and further preferably from 0.05 to 0.30. In addition, the surface atom ratio between carbons in carboxyl group and a total quantity of carbons (COOH/C) is more preferably from 1% to 4% and further preferably from 1% to 3%.

By controlling the above the surface atom ratio between oxygen and carbon (O/C) and the surface atom ratio between carbons in carboxyl group and a total quantity of carbons (COOH/C) within favorable ranges, the efficiencies of reaction with a primary amino group of a (meth)acrylic polymer (A3) and with an oxazoline group of a oxazoline-group-containing polymer (A4) can be improved, resulting in the improvement of interface adhesion. Accordingly, mechanical properties of a thermoplastic resin composition can be improved.

[the surface atom ratio between oxygen and carbon (O/C) measurement method]

The surface atom ratio between oxygen and carbon of the carbon fiber (O/C) is determined by the following procedures based on Electron spectroscopy for chemical analysis. First, carbon fibers, from which a sizing agent and the like adhering to the carbon fiber surface have been removed using a solvent, is cut to 20 mm in length and placed and extended on a copper-made sample support. Thereafter, a sample chamber is maintained at $1 \times 10^8$ Torr, and $AlK_{\alpha 1,2}$ are used as an X-ray source. The value of the kinetic energy (K.E.) of the main peak of $C_{1S}$ is adjusted to 1202 eV, and thus used as a correction value for a peak that appears upon charging during measurement. The $C_{1S}$ peak area (in terms of K.E.) is obtained by calculating the integral of a peak line formed with the $C_{1S}$ peak line and a straight baseline drawing from 1191 to 1205 eV. The $O_{1s}$ peak area (in terms of K.E.) is obtained by calculating the integral of a peak line formed with the $O_{1s}$ peak line and a straight baseline drawing from 947 to 959 eV.

Herein, the surface atom ratio between oxygen and carbon is calculated in terms of the proportion of atoms with the use of a sensibility correction value specific to an apparatus based on the proportion of the above $O_{1s}$ peak area to the $C_{1s}$ peak area. In the Examples of the present invention, the X-ray photoelectron spectroscope used was an ES-200 model (Kokusai Denkisya). The sensibility correction value was determined to be 1.74.

[The surface atom ratio between carbons in carboxyl group and a total quantity of carbons (COOH/C) of carbon fiber measurement method]

The surface atom ratio between carbons in carboxyl group and a total quantity of carbons (COOH/C) of carbon fiber is determined by the following procedures based on Electron spectroscopy for chemical analysis with chemical modification.

First, a bundle of carbon fibers, from which matter adhering to the carbon fiber surfaces and the like have been removed using a solvent, is cut and placed and extended on a platinum-made sample support. The obtained carbon fibers are exposed to an atmosphere containing a 0.02 mol/l ethanol trifluoride gas, a 0.001 mol/l dicyclohexyl carbodiimide gas, and a 0.04 mol/l pyridine gas at 60°C for 8 hours for chemical modification treatment. Thereafter, the fibers are mounted on an X-ray photoelectron spectroscope with a photoelectron exit angle of 35°. A sample chamber is maintained at a degree of vacuum of $1 \times 10^8$ Torr, and$AlK\alpha_{1,2}$ are used as an X-ray source. Then, the value of the binding energy (B.E.) of the main peak of $C_{1S}$ is adjusted to 284.6 eV, and thus used as the correction value for a peak that appears upon charging during measurement. The $C_{1S}$ peak area [$C_{1S}$] was obtained by drawing a straight baseline from 282 to 296 eV. The $F_{1S}$ peak area [$F_{1S}$] was obtained by drawing a straight baseline from 682 to 695 eV. In addition, at the same time, the rate of reaction "r" is determined from the $C_{1s}$ peak split of polyacrylic acid subjected to chemical modification treatment and the survival rate "m" of a dicyclohexyl carbodiimide derivative is determined from the $O_{1S}$ peak split.

The surface atom ratio between carbons in carboxyl group and a total quantity of carbons (COOH/C) is expressed with a value calculated by the following equation:

$$COOH/C = [[F_{1S}]/\{(3k[C_{1S}] - (2 + 13m)[F_{1S}])r\}] \times 100\ (\%)$$

(where k represents the sensibility correction value (apparatus-specific) for the Fis peak area relative to the $C_{1S}$ peak area). In addition, in the Examples of the present invention, an SSX-100-206 model (SSI, U.S.A.) was used. The sensibility correction value specific to the apparatus was 3.919.

A means of controlling the surface atom ratio between oxygen and carbon of the carbon fiber (O/C) and the surface atom ratio between carbons in carboxyl group and a total quantity of carbons of the carbon fiber (COOH/C)

within predetermined ranges is not particularly limited. However, techniques involving electrolytic oxidation treatment, chemical oxidation treatment, and vapor-phase oxidation treatment can be used. In particular, electrolytic oxidation treatment is preferable in terms of ease of handling.

Preferred examples of an electrolyte used for electrolytic treatment include: aqueous solutions of inorganic acids such as sulfuric acid, nitric acid, and hydrochloric acid, inorganic hydroxides such as sodium hydroxide, potassium hydroxide, and barium hydroxide, inorganic salts such as ammonia, sodium carbonate, and sodium bicarbonate, and organic salts such as sodium acetate and sodium benzoate; potassium salts, barium salts, other metal salts, and ammonium salts of the above examples; and organic compounds such as hydrazine. Among them, preferably, an inorganic acid, and particularly preferably, sulfuric acid or nitric acid is used for an electrolyte. Regarding the level of electrolytic treatment, the surface atom ratio between oxygen and carbon (O/C) and the surface atom ratio between carbons in carboxyl group and a total quantity of carbons (COOH/C) can be controlled by predetermining the quantity of electricity that flows upon electrolytic treatment.

Preferably, carbon fibers used for the present invention is in a bundle form. The strand strength is preferably 3 to 8 GPa and more preferably 4 to 7 GPa. Also, carbon fibers having a strand elastic modulus of 200 to 500 GPa can be preferably used.

The above strand strength can be obtained by impregnating a resin having the following composition into a bundle of carbon fibers or graphitized fibers, performing curing at 130°C for 35 minutes, and then carrying out a tensile test method according to JIS R-7601 (1986).

(Resin composition)

| | |
|---|---|
| Cycloaliphatic epoxy resin (3,4-epoxycyclohexylmethyl-3,4-epoxy-cyclohexyl -carboxylate) | 100 parts by weight |
| Boron trifluoride monoethylamine | 3 parts by weight |
| Acetone | 4 parts by weight |

Further, the strand elastic modulus of carbon fibers can be obtained by carrying out a tensile test in a manner similar to the above strand strength measurement method and referring to a load-extension slope.

In addition, the total fineness of carbon fibers used for the present invention is preferably 50 to 5,000 tex. The total fineness is more preferably 500 to 3,500 tex. When the total fineness is less than 50 tex, efficiency of the cutting operation deteriorates and thus the productivity deteriorates in some cases. In addition, when the total fineness exceeds 5,000 tex, the convergence property of fiber bundle becomes poor and thus scuffing occurs upon cutting in some cases.

In addition, the number of filamants in a bundle of carbon fibers used for the present invention is preferably 1,000 to 70,000 and more preferably 12,000 to 48,000. When the number of filaments is less than 1,000, efficiency of the cutting operation deteriorates and thus the productivity deteriorates in some cases. In addition, when the number of filaments exceeds 70,000, the convergence property of fiber bundle becomes poor and thus scuffing occurs upon cutting in some cases.

The form of carbon fibers used for the present invention is not particularly limited. However, sheet-type fabric such as continuous fiber, woven cloth, web, nonwoven cloth, felt, or mat is preferably used.

The carbon fibers used for the present invention can be cut to 1 to 60 mm in length before use. Preferably, the length is 3 to 50 mm. When the length is from 1 to 60 mm, both reinforcing effects and molding liquidity upon molding can be obtained.

[Polymer (D)]

Further, according to the present invention, in terms of reactivity with an amino group of a (meth)acrylic polymer (A3) and an oxazoline group of a polymer having an oxazoline group (A4), a polymer (D) containing at least one functional group selected from the group consisting of a carboxyl group, an acid anhydride group, and an epoxy group in an amount of 0.01 to 20 parts by weight may adhere to 100 parts by weight of carbon fibers. The amount is more preferably 0.1 to 10 parts by weight and further preferably 0.1 to 5 parts by weight.

According to the present invention, a polymer (D) has a function of enhancing not only adhesivity between a (meth)acrylic polymer (A3) and a polymer having an oxazoline group (A4) but also adhesivity between carbon fibers and thermoplastic resin. Thus, the polymer is preferably applied, as a component of a sizing agent, to carbon fiber surfaces.

Further, according to the present invention, in terms of reaction efficiency with an amino group of (meth)acrylic polymer (A3) and an oxazoline group of a polymer having an oxazoline group (A4), an acid value or an epoxy value of a polymer (D) is preferably 10 to 500 mg KOH/g, more preferably 20 to 300 mg KOH/g, and further preferably 30 to 200 mg KOH/g.

Other conditions regarding a polymer (D) are similar to those of the above polymers.

In addition, according to the present invention, in terms of polymer reactivity of a polymer (D) with an amino

group of a (meth)acrylic polymer (A3) and an oxazoline group of a polymer having an oxazoline group (A4), the weight proportion (D)/(A3) or (D)/(A4) is preferably from 0 to 100. The above weight proportion is more preferably 0 to 70 and further preferably 0 to 30.

[Sizing agent (E)]

Further, according to the present invention, in view of the convergence property of fiber bundle of carbon fibers, at least one resin serving as a sizing agent (E) selected from the group consisting of urethane resin, acrylic resin, epoxy resin, polyamide resin, polyester resin, and polyether resin is allowed to adhere in an amount of 0 to 20 parts by weight with respect to 100 parts by weight of carbon fibers.

According to the present invention, a sizing agent (E) has a function of further enhancing the convergence property of fiber bundle of carbon fibers. Thus, it may be applied, as a component of a sizing agent, to carbon fiber surfaces.

[Method for applying individual components]

According to the present invention, a method for allowing a (meth)acrylic polymer (A3) or a polymer having an oxazoline group (A4), a polymer (D), and a sizing agent (E) to adhere to carbon fibers is not particularly limited. However, examples of such method are described as follows: a method comprising immersing carbon fibers in a solution prepared with an aqueous system or an organic solvent system via a roller; a method comprising allowing carbon fibers to come into contact with a roller to which a solution prepared with an aqueous system or an organic solvent system has adhered; and a method comprising spraying a solution prepared with an aqueous system or an organic solvent system onto carbon fibers. In addition, a method for applying a solution prepared with an aqueous system or an organic solvent system of a (meth)acrylic polymer (A3), a polymer having an oxazoline group (A4), a polymer (D), and a sizing agent (E) to carbon fibers may be a batch method or a continuous method. However, a continuous method is preferable in terms of quality of productivity and reduced variation. In such case, it is preferable to control the concentration and temperature of a solution prepared with an aqueous system or an organic solvent system and a thread line tension in a manner such that individual active ingredients of a (meth)acrylic polymer (A3), a polymer having an oxazoline group (A4), a polymer (D), and a sizing agent (E) are allowed to uniformly adhere in amounts within appropriate ranges to carbon fibers. Further, when the above solution prepared with an aqueous system or an organic solvent system comprising individual components of a (meth)acrylic polymer (A3), a polymer having an oxazoline group (A4), a polymer (D), and a sizing agent (E) is applied, carbon fibers may be vibrated via ultrasound.

According to the present invention, the term "aqueous system" indicates an aqueous solution or a water-suspended or water-emulsified dispersion comprising the above individual components of a (meth)acrylic polymer (A3), a polymer having an oxazoline group (A4), a polymer (D), and a sizing agent (E). In addition, in an organic solvent system, the above individual components of a (meth)acrylic polymer (A3), a polymer having an oxazoline group (A4), a polymer (D), and a sizing agent (E) are dissolved in methanol, ethanol, dimethyl formamide, dimethyl acetamide, toluene, tetrahydrofuran, acetone, and the like. An aqueous system is preferably applied because evaporation of an organic solvent does not occur during a process for applying such polymer to carbon fibers and there is no risk of ignition or environmental contamination.

In addition, a (meth)acrylic polymer (A3) or a polymer having an oxazoline group (A4), a polymer (D), and a sizing agent (E) may be applied separately several times or simultaneously. When the above are applied separately, hot-air drying may be carried out at a temperature of 100°C to 200°C for 0.1 to 100 minutes for each application. When the above are applied simultaneously, hot-air drying may be carried out at a temperature of 100°C to 200°C for 0.1 to 100 minutes after simultaneous application.

[Thermoplastic resin]

Thermoplastic resin serving as matrix resin, in which the carbon fibers for thermoplastic resin of the present invention are mixed, is as described above. Herein, in the case of polyolefin resin, modified polyolefin resin containing at least one functional group selected from the group consisting of a carboxyl group, an acid anhydride group, and an epoxy group is preferable in terms of reactivity with an amino group of an acrylic polymer (A3) and an oxazoline group of a polymer having an oxazoline group (A4).

The amount (to be loaded into a thermoplastic resin composition) of the carbon fibers for thermoplastic resin of the present invention is preferably 1% to 70% by weight, more preferably 5% to 50% by weight, and further preferably 10% to 40% by weight.

[Additives and fillers]

Fillers, additives, and the like may be contained in thermoplastic resin comprising carbon fibers for thermoplastic resin of the present invention depending on applications and the like, as long as they do not adversely influence mechanical properties. Examples of fillers and additives are as described above.

[Molding method]

A method for molding carbon fibers for thermoplastic resin and thermoplastic resin into a molded product is not particularly limited. Examples of such method include press molding, injection molding, blow molding, rotary molding, extrusion molding, transfer molding, and filament winding molding.

[Applications of molded products of the fiber-reinforced thermoplastic resin composition and molded products comprising carbon fibers for thermoplastic resin]

The fiber-reinforced thermoplastic resin composition of the present invention can be used for molded products. Such molded products can be used for the following examples: personal computers; displays; office automation apparatus; cell phones, handheld terminals; facsimile terminals; compact discs; portable MDs; portable radio cassettes; PDAs (handheld terminals such as electronic notebooks); video cameras; digital cameras; optical instruments; audio players; air conditioners; lighting apparatuses; amusement products; toys and games; cases and internal members used as trays and chassis of electric/electronic devices of other electric household appliances and the like; mechanical parts; building materials such as panels; motor parts; alternator terminals; alternator connectors; IC regulators; potentiometer bases (for light dimmer); suspension parts; a variety of bulbs such as exhaust gas bulbs; a variety of pipes such as fuel-related pipes and pipes used for emission or intake; air intake nozzle snorkels; intake manifolds; a variety of arms; a variety of frames; a variety of hinges; a variety of bearings; fuel pumps; gasoline tanks; CNG tanks; engine cooling water joints; carburetor main bodies; carburetor spacers; exhaust gas sensors; cooling water sensors; oil temperature sensors; brake pad wear sensors; throttle position sensors; crankshaft position sensors; air-flow meters; brake pad wear sensors; thermostat bases used for air conditioners; heating air flow control bulbs; radiator motor brush holders; water pump impellers; turbine vanes; wiper motor parts; distributors; starter switches; starter relays; transmission wire harness; window washer nozzles; air conditioner panel switch substrates; fuel-related electromagnetic valve coils; fuse connectors; battery trays; AT brackets; head lamp supports; pedal housings; handles; door beams; protectors; chassis; frames; armrests; horn terminals; step motor rotors; lamp sockets; lamp reflectors; lamp housings; brake pistons; noise shields; radiator supports; spare tire covers; sheet shells; solenoid bobbins; engine oil filters; ignitor housings; undercovers; scuff plates; pillar trims; propeller shafts; wheels; fenders; facers; bumpers; bumper beams; bonnets; aeroparts; platforms; cowl louvers; roofs; instrument panels; automobile and two-wheel vehicle parts such as spoilers and a variety of modules; and airplane parts, members, and outer plates such as landing gear pods, winglets, spoilers, edges, ladders, elevators, failings, and ribs,.

Applications of molded products comprising the carbon fiber for thermoplastic resin of the present invention are similar to the above applications.

[Examples]

The present invention is hereafter described in greater detail with reference to the following Examples, although the technical scope of the present invention is not limited thereto.

Hereafter, evaluation methods used in the Examples and the Comparative examples are described.

[Method for evaluating bending properties of an injection molding product]

A bending strength test piece 130 ± 1 mm in length and 25 ± 0.2 mm in width was cut out from an obtained injection molding product. In accordance with the test method specified by ASTM D-790 (2004), the bending strength was measured by setting the support span to 100 mm with the use of a three-point bending testing jig (indenter: 10 mm, fulcrum: 10 mm) at a crosshead speed of 5.3 mm/minute. In addition, in this Example, the testing machine used was an "Instron" (trademark) universal testing machine 4201 (Instron). The number of measurements was designated as n = 5 and the mean value was used as the bending strength.

[Method for evaluating impact-resistant properties of an injection molding product]

In accordance with the standards of ASTM D256, an unnotched Izod impact-resistant test and a notched Izod

impact-resistant test were carried out. The thickness of the test piece used was 3.2 mm. The test was carried out at a test piece moisture percentage of 0.1% or less, an atmospheric temperature of 23°C, and a humidity of 50%. The number of measurements was designated as n = 5 and the mean value was used as the impact-resistant strength.

[Method for evaluating bending properties of a press molding product]

A bending strength test piece 100 ± 1 mm in length and 10 ± 0.2 mm in width was cut out from a press molding product. In accordance with the test method specified by ASTM D-790 (2004), the bending strength was measured by setting the support span to 75 mm with the use of a three-point bending testing jig (indenter: 10 mm, fulcrum: 10 mm) at a crosshead speed of 2 mm/minute. In addition, in this Example, the testing machine used was an "Instron" (trademark) universal testing machine 4201 (Instron). The number of measurements was designated as n = 5 and the mean value was used as the bending strength.

[Method for evaluating impact-resistant properties of a press molding product]

In accordance with the standard of ASTM D256, an unnotched Izod impact-resistant test and a notched Izod impact-resistant test were carried out. The thickness of the test piece used was 3.2 mm. The test was carried out at a test piece moisture percentage of 0.1% or less, an atmospheric temperature of 23°C, and a humidity of 50%. The number of measurements was designated as n = 5 and the mean value was used as the impact-resistant strength.

Components used in the following Examples and Comparative examples are as described below.

[Components A-1 to A-8]

A-1: Acrylic polymer having an aminoalkylene group in the side chain "POLYMENT" (trademark) SK-1000 (Nippon Shokubai Co., Ltd.)

Amine hydrogen equivalent weight: 650 g/eq
Weight-average molecular weight: 50,000
N/C: 0.018
Saturated water absorption: 2%

A-2: Acrylic polymer having an aminoalkylene group in the side chain "POLYMENT" (trademark) NK-350 (Nippon Shokubai Co., Ltd.)

Amine hydrogen equivalent weight: 1400 g/eq
Weight-average molecular weight: 100,000
N/C: 0.005
Saturated water absorption: 1%

A-3: Acrylic polymer having an aminoalkylene group in the side chain "POLYMENT" (trademark) NK-100PM (Nippon Shokubai Co., Ltd.)

Amine hydrogen equivalent weight: 400 g/eq
Weight-average molecular weight: 20,000
N/C: 0.02
Saturated water absorption: 2%

A-4: Copolymer of oxazoline-group-containing monomer and styrene "EPOCROS" (trademark) WS-700 (Nippon Shokubai Co., Ltd.)

Oxazoline equivalent: 220 g/eq
N/C: 0.01
Saturated water absorption: 3%

A-5: Copolymer of oxazoline-group-containing monomer and acrylic monomer

"EPOCROS" (trademark) RPS-1005 (Nippon Shokubai Co., Ltd.)
Oxazoline equivalent: 3,700 g/eq

N/C: 0.002
Saturated water absorption: 2%

A-6: Polymethyl methacrylate

"SUMIPEX" (trademark) LG (Sumitomo Chemical Co., Ltd.)
Saturated water absorption: 1%

A-7: Polyacrylamide

50% by weight aqueous solution of polyacrylamide (ALDRICH)
Weight-average molecular weight: 10,000
N/C: 0.33
Saturated water absorption: 10%

A-8: polyamide

Water-soluble nylon A-90 (TORAY Industries, Inc.)
Saturated water absorption: 15%

[Components B-1 to B-3]

B-1: PAN carbon fiber

Carbon fiber "Torayca" (trademark) (TORAY Industries, Inc.)
Mass per unit length: 0.8 g/m
Specific gravity: 1.8 g/$cm^3$
Tensile strength: 4.9 GPa
Tensile elastic modulus: 230.0 GPa
O/C: 0.10
Surface carboxyl group concentration: 1.2%
Number of filaments: 12,000

B-2: PAN carbon fiber

Carbon fiber "Torayca" (trademark) (TORAY Industries, Inc.)
Mass per unit length: 0.8 g/m
Specific gravity: 1.8 g/$cm^3$
Tensile strength: 4.9 GPa
Tensile elastic modulus: 230.0 GPa
O/C: 0.22
Surface carboxyl group concentration: 2.4%
Number of filaments: 12,000

B-3: Basalt fiber (basalt yarn in a long fiber form obtained by melting basalt)

Specific gravity: 2.8 g/$cm^3$
Tensile strength: 4.8 GPa
Tensile elastic modulus: 89.0 GPa

Composition:

$SiO_2$: 48% by weight; $Al_2O_3$: 10% by weight; $TiO_2$: 3% by weight; $Fe_2O_3$: 11% by weight; MgO: 12% by weight; CaO: 12% by weight; $Na_2O$: 3% by weight; and $K_2O$: 1% by weight.

[Components C-1 to C-5]

C-1: Anhydrous maleic acid-modified polypropylene resin

"ADMER" (trademark) QE800 (Mitsui Chemicals, Inc.)

C-2: Mixture of native polypropylene resin and acid-modified polypropylene resin

Native polypropylene resin: J830HV (Sumitomo Mitsui Polyolefin): 50 parts by weight
Acid-modified polypropylene resin: "ADMER" (trademark) QE800 (Mitsui Chemicals, Inc.): 50 parts by weight

C-3: native polypropylene resin

J830HV (Sumitomo Mitsui polyolefin)
C-4: polycarbonate resin
A1700 (Idemitsu Kosan Co., Ltd.)
C-5: Mixture of native polypropylene resin and acid-modified polypropylene resin
Native polypropylene resin: J830HV (Sumitomo Mitsui polyolefin): 90 parts by weight
Acid-modified polypropylene resin: "ADMER" (trademark) QB510 (Mitsui Chemicals, Inc.): 10 parts by weight

[Components D-1 to D-2]

D-1: Anhydrous maleic acid-modified polypropylene

MGP-055 (Maruyoshi Chemical Co., Ltd.)
Acid value: 45 mg KOH/g
Weight-average molecular weight: 20,000

D-2: Acrylic acid-modified polyethylene

MYE30E5 (Maruyoshi Chemical Co., Ltd.)
Acid value: 40mg KOH/g
Weight-average molecular weight: 20,000

[Component E-1]

E-1: Urethane resin

Self-emulsifying urethane resin aqueous solution "Superflex" (trademark) 300 (Dai-ichi Kogyo Seiyaku Co., Ltd.)

"Examples and Comparative examples of injection molding materials"

The following Examples 1 to 10 and Comparative examples 1 to 5 are Examples and Comparative examples relating to injection molding materials.

(Example 1)

I. Step of applying a sizing agent:

A 5%-by-weight solution of A-1 (acrylic polymer) was prepared as a sizing agent and then applied to B-1 (carbon fiber) by a dipping method, followed by drying at 140°C for 5 minutes. The amount of adhering A-1 (acrylic polymer) was 1.5 parts by weight with respect to 100 parts by weight of B-1 (carbon fiber).

II. Step of cutting fiber:

B-1 (carbon fiber) to which the sizing agent had adhered in the above step I was cut to 1/4 inch in size with a cartridge cutter.

III. Extrusion step

A TEX-30α biaxial extruder (screw diameter: 30 mm, L/D = 32) (the Japan Steel Works, LTD.) was used. C-1 (anhydrous maleic acid-modified polypropylene resin pellet) was supplied from the main hopper and B-1 (carbon fiber) that had been cut in the previous step was supplied from the side hopper downstream thereof. Then, sufficient kneading was carried out at a barrel temperature of 220°C and at 150 rpm, followed by deaeration via a vacuum vent located further downstream. Upon supply, the amount of B-1 (carbon fiber) was adjusted to 25 parts by weight with respect to 100 parts by weight of polypropylene resin with the use of a weight feeder. The molten resin was discharged from the die outlet (diameter: 5 mm). The obtained strand was cooled and then cut with a cutter. Thus, molding material pellets were obtained.

IV. Step of injection molding:

The molding material pellets obtained in the extrusion step were molded into a test piece (molded product) used for property evaluation at a cylinder temperature of 220°C and a mold temperature of 60°C with the use of a J350EIII injection molding machine (The Japan Steel Works, LTD.). The obtained test piece was allowed to stand in a thermo-hygrostat adjusted to 23°C and 50% RH for 24 hours and then subjected to a property evaluation test. Subsequently, the thus obtained test piece (molded product) used for property evaluation was evaluated according to the above method for evaluating an injection molding product. Evaluation results are summarized in table 1. The content of B-1 (carbon fiber) in the obtained molded product was 20% by weight.

(Example 2)

Example 2 was carried out in the same manner as Example 1, except that C-2 (mixture of native polypropylene resin and acid-modified polypropylene resin) was used instead of C-1 (anhydrous maleic acid-modified polypropylene resin pellet) in step III in Example 1. Table 1 shows evaluation results for the obtained molded product. The content of B-1 (carbon fiber) in the molded product was 20% by weight.

(Example 3)

Example 3 was carried out in the same manner as Example 1 except that A-2 (acrylic polymer) was used instead of A-1 (acrylic polymer) in step I in Example 1. Table 1 shows evaluation results for the obtained molded product. The content of B-1 (carbon fiber) in the molded product was 20% by weight.

(Example 4)

Example 3 was carried out in the same manner as Example 1 except that A-3 (acrylic polymer) was used instead of A-1 (acrylic polymer) in step I in Example 1. Table 1 shows evaluation results for the obtained molded product. The content of B-1 (carbon fiber) in the molded product was 20% by weight.

(Example 5)

I. Step of applying a sizing agent:

A 5%-by-weight solution of A-1 (acrylic polymer) was prepared and then applied to B-1 (carbon fiber) by a dipping method, followed by drying at 140°C for 5 minutes. The amount of adhering A-1 (acrylic polymer) was 1.5 parts by weight with respect to 100 parts by weight of B-1 (carbon fiber). Further, a 5%-by-weight water dispersion of D-1 (anhydrous maleic acid-modified polypropylene resin) was prepared. B-1 (carbon fiber) to which A-1 (acrylic polymer) had adhered was dipped therein via a roller by a dipping method, followed by drying at 140°C for 5 minutes. The amount of adhering D-1 (anhydrous maleic acid-modified polypropylene resin) was 1.5 parts by weight with respect to 100 parts by weight of B-1 (carbon fiber).

II. Step of cutting fiber:

The carbon fiber to which the sizing agent had adhered in the above step I was cut to 1/4 inch in size with a cartridge cutter.

III. Extrusion step

A TEX-30α biaxial extruder (screw diameter: 30 mm, L/D = 32) (the Japan Steel Works, LTD.) was used. C-3 (native polypropylene resin pellet) was supplied from the main hopper and B-1 (carbon fiber) that had been cut in the previous step was supplied from the side hopper downstream thereof. Then, sufficient kneading was carried out at a barrel temperature of 220°C and at 150 rpm, followed by deaeration via a vacuum vent located further downstream. Upon supply, the amount of B-1 (carbon fiber) was adjusted to 25 parts by weight with respect to 100 parts by weight of polypropylene resin with the use of a weight feeder. The molten resin was discharged from the die outlet (diameter: 5 mm). The obtained strand was cooled and then cut with a cutter. Thus, molding material pellets were obtained.

IV. Injection molding step:

The molding material pellets obtained in the extrusion step were molded into a test piece (molded product) used for property evaluation at a cylinder temperature of 220°C and a mold temperature of 60°C with the use of a J350EIII injection molding machine (The Japan Steel Works, LTD.). The obtained test piece was allowed to stand in a thermo-hygrostat adjusted to 23°C and 50%RH for 24 hours and then subjected to a property evaluation test. Subsequently, the thus obtained test piece (molded product) used for property evaluation was evaluated according to the above method for evaluating an injection molding product. Evaluation results are summarized in table 1. The content of B-1 (carbon fiber) in the obtained molded product was 20% by weight.

(Example 6)

Example 6 was carried out in the same manner as Example 1 except that D-2 (acrylic acid-modified polyethylene) was used instead of D-1 in step I in Example 5. Table 1 shows evaluation results for the obtained molded product. The content of B-1 (carbon fiber) in the molded product was 20% by weight.

(Example 7)

Example 7 was carried out in the same manner as Example 1 except that A-4 (oxazoline-group-containing polymer) was used instead of A-1 (acrylic polymer) in step I in Example 1. Table 1 shows evaluation results for the obtained molded product. The content of B-1 (carbon fiber) in the molded product was 20% by weight.

(Example 8)

I. Step of applying a sizing agent:

A 5%-by-weight aqueous solution of A-4 (oxazoline-group-containing polymer) was prepared and then applied to B-1 (carbon fiber) by a dipping method, followed by drying at 140°C for 5 minutes. The amount of adhering A-4 (oxazoline-group-containing polymer) was 1.5 parts by weight with respect to 100 parts by weight of B-1 (carbon fiber).

II. Step of cutting fiber:

B-1 (carbon fiber) to which the sizing agent had adhered in the above step I was cut to 1/4 inch in size with a cartridge cutter.

III. Extrusion step

A TEX-30α biaxial extruder (screw diameter: 30 mm, L/D = 32) (the Japan Steel Works, LTD.) was used. C-4 (polycarbonate resin) was supplied from the main hopper and B-1 (carbon fiber) that had been cut in the previous step was supplied from the side hopper downstream thereof. Then, sufficient kneading was carried out at a barrel temperature of 300°C and at 150 rpm, followed by deaeration via a vacuum vent located further downstream. Upon supply, the amount of B-1 was adjusted to (carbon fiber) 25 parts by weight with respect to 100 parts by weight of polypropylene resin with the use of a weight feeder. The molten resin was discharged from the die outlet (diameter: 5 mm). The obtained strand was cooled and then cut with a cutter. Thus, molding material pellets were obtained.

IV. Step of injection molding:

The molding material pellets obtained in the extrusion step were molded into a test piece (molded product)

used for property evaluation at a cylinder temperature 300°C and a mold temperature of 80°C with the use of a J350EIII injection molding machine (The Japan Steel Works, LTD.). The obtained test piece was allowed to stand in a thermo-hygrostat adjusted to 23°C and 50% RH for 24 hours and then subjected to a property evaluation test. Subsequently, the thus obtained test piece (molded product) used for property evaluation was evaluated according to the above method for evaluating an injection molding product. Evaluation results are summarized in table 1. The content of B-1 (carbon fiber) in the obtained molded product was 20% by weight.

(Example 9)

Example 9 was carried out in the same manner as Example 1 except that A-5 (oxazoline-group-containing polymer) was used instead of A-1 (acrylic polymer) in step I in Example 1. Table 1 shows evaluation results for the obtained molded product. The content of B-1 (carbon fiber) in the molded product was 20% by weight.

(Example 10)

Example 10 was carried out in the same manner as Example 1 except that B-3 (basalt fiber) was used instead of B-1 (carbon fiber) in step I in Example 1. Table 1 shows evaluation results for the obtained molded product. The content of B-3 (basalt fiber) in the molded product was 20% by weight.

(Comparative example 1)

Comparative example 1 was carried out in the same manner as Example 1 except that A-1 (acrylic polymer) was not used in step I in Example 1. Table 1 shows evaluation results for the obtained molded product. The content of B-1 (carbon fiber) in the molded product was 20% by weight.

(Comparative example 2)

Comparative example 2 was carried out in the same manner as Example 2 except that A-1 (acrylic polymer) was not used in step I in Example 2. Table 1 shows evaluation results for the obtained molded product. The content of B-1 (carbon fiber) in the molded product was 20% by weight.

(Comparative example 3)

Comparative example 3 was carried out in the same manner as Example 5 except that A-1 (acrylic polymer) and D-1 were not used in step I in Example 5. Table 1 shows evaluation results for the obtained molded product. The content of B-1 (carbon fiber) in the molded product was 20% by weight.

(Comparative example 4)

Comparative example 4 was carried out in the same manner as Example 8 except that A-4 (oxazoline-group-containing polymer) was not used in step I in Example 8. Table 1 shows evaluation results for the obtained molded product. The content of B-1 (carbon fiber) in the molded product was 20% by weight.

(Comparative example 5)

Comparative example 5 was carried out in the same manner as Example 10 except that A-1 (acrylic polymer) was used in step I in Example 10. Table 1 shows evaluation results for the obtained molded product. The content of B-3 (basalt fiber) in the molded product was 20% by weight.

[Table 1]

| | (A) | (B) | (C) | (D) | Bending property | | Izod impact-resistant property | |
|---|---|---|---|---|---|---|---|---|
| | | | | | Strength | Elastic modulus | Unnotched | Notched |
| | | | | | (MPa) | (GPa) | (KJ/m2) | (J/m) |
| Example 1 | A-1 | B-1 | C-1 | - | 114 | 7.8 | 46 | 111 |
| Example 2 | A-1 | B-1 | C-2 | - | 109 | 7.5 | 41 | 105 |

(continued)

| | (A) | (B) | (C) | (D) | Bending property | | Izod impact-resistant property | |
|---|---|---|---|---|---|---|---|---|
| | | | | | Strength | Elastic modulus | Unnotched | Notched |
| | | | | | (MPa) | (GPa) | (KJ/m2) | (J/m) |
| Example 3 | A-2 | B-1 | C-1 | - | 107 | 7.5 | 42 | 98 |
| Example 4 | A-3 | B-1 | C-1 | - | 114 | 7.7 | 48 | 110 |
| Example 5 | A-1 | B-1 | C-3 | D-1 | 84 | 8.3 | 19 | 56 |
| Example 6 | A-1 | B-1 | C-3 | D-2 | 80 | 8.1 | 20 | 51 |
| Example 7 | A-4 | B-1 | C-1 | - | 109 | 7.7 | 47 | 108 |
| Example 8 | A-4 | B-1 | C-4 | - | 182 | 11.0 | 51 | 87 |
| Example 9 | A-5 | B-1 | C-1 | - | 106 | 7.5 | 42 | 83 |
| Example 10 | A-1 | B-3 | C-1 | - | 98 | 3.7 | 40 | 77 |
| Comparative example 1 | - | B-1 | C-1 | - | 104 | 7.1 | 39 | 74 |
| Comparative example 2 | - | B-1 | C-2 | - | 91 | 7.0 | 28 | 63 |
| Comparative example 3 | - | B-1 | C-3 | - | 52 | 7.2 | 14 | 46 |
| Comparative example 4 | - | B-1 | C-4 | - | 162 | 10.0 | 46 | 79 |
| Comparative example 5 | - | B-3 | C-1 | - | 89 | 3.5 | 38 | 70 |

The following is clearly understood based on the results of Examples 1 to 10 and Comparative examples 1 to 5 in table 1.

That is, the fiber-reinforced thermoplastic resin compositions of Examples 1, 3, 4, 7, and 9 are superior in mechanical properties to the fiber-reinforced thermoplastic resin composition of Comparative example 1. In addition, the fiber-reinforced thermoplastic resin composition of Example 2 is superior in mechanical properties to the fiber-reinforced thermoplastic resin composition of Comparative example 2. Also, the fiber-reinforced thermoplastic resin compositions of Examples 5 and 6 are superior in mechanical properties to the fiber-reinforced thermoplastic resin composition of Comparative example 3. Also, the fiber-reinforced thermoplastic resin composition of Example 8 is superior in mechanical properties to the fiber-reinforced thermoplastic resin composition of Comparative example 4. Further, the fiber-reinforced thermoplastic resin composition of Example 10 is superior in mechanical properties to the fiber-reinforced thermoplastic resin composition of Comparative example 5.

"Examples and Comparative examples of press molding materials"

The following Examples 11 and 12 and Comparative examples 6 and 7 are Examples and Comparative examples of press molding materials.

(Example 11)

I. Step of processing reinforcing fiber into a web:

B-1 (carbon fiber) was cut to 1/4 inch in size with a cartridge cutter and then treated by air spreading such that a web was obtained. The mass per unit area of the web was 190 $g/m^2$

II. Step of adding a binder to sheet-type fabric

The web of B-1 (carbon fiber) obtained in step I was placed on a stainless steel plate (20 cm × 20 cm). A 0.5%-by-weight water dispersion of A-1 (acrylic polymer) (30 g) serving as a binder was sprayed thereon, followed by drying at a temperature of 140°C for 60 minutes.

III. Step of integrating a reinforcing fiber web and thermoplastic resin

A film made of C-1 (anhydrous maleic acid-modified polypropylene resin) (thickness: 500 μm) was placed on the reinforcing fiber web obtained in step II. The web with the film was allowed to stand at a temperature of 220°C for 30 minutes. Thus, a carbon-fiber-reinforced sheet was obtained. Five such carbon-fiber-reinforced sheets were laminated and kept at a temperature of 220°C for 5 minutes under pressurization of 100 $kgf/cm^2$ with the use of a hot press molding machine. Accordingly, a plate-type molded product (20 cm × 20 cm × 3.2 mm) was obtained. Table 2 shows evaluation results for the obtained molded product. The content of B-1 (carbon fiber) in molded product was 30% by weight.

(Example 12)

I. Step of processing reinforcing fiber into a web:

After cutting B-1 (carbon fiber) to 1/4 inch in size with a cartridge cutter, fibers were treated by air spreading such that a web was obtained. The mass per unit area of web was 190 $g/m^2$.

II. Step of adding a binder to sheet-type fabric

The web of B-1 (carbon fiber) obtained in step I was placed on a stainless steel plate (20 cm × 20 cm). A 0.5%-by-weight water dispersion of A-1 (acrylic polymer) (30 g) serving as a binder was sprayed thereon, followed by drying at 140°C for 60 minutes. Further, 30 g of a 0.5%-by-weight water dispersion of D-1 (anhydrous maleic acid-modified polypropylene resin) was sprayed thereon, followed by drying at 140°C for 60 minutes. The total mass per unit area of the web was 200 $g/m^2$

III. Step of integrating a reinforcing fiber web and thermoplastic resin

A film made of C-3 (native polypropylene resin) (thickness: 500 μm) was placed on the reinforcing fiber web obtained in step II. The web with the film was allowed to stand at 220°C for 30 minutes. Thus, a carbon-fiber-reinforced sheet was obtained. The total mass per unit area of the fiber-reinforced sheet was 640 $g/m^2$. Five pieces of the obtained carbon-fiber-reinforced sheet were laminated and kept at 220°C for 5 minutes under pressurization of 100 $kgf/cm^2$ with the use of a hot press molding machine. Accordingly, a plate-type molded product 20 cm × 20 cm × 3.2 mm in size was obtained. Table 2 shows evaluation results for the obtained molded product. The content of B-1 (carbon fiber) in molded product was 30% by weight.

(Comparative example 6)

Comparative example 6 was carried out in the same manner as Example 11 except that A-1 (acrylic polymer) was not used in step II in Example 11. Table 2 shows evaluation results for the obtained molded product. The content of B-1 (carbon fiber) in the molded product was 30% by weight.

(Comparative example 7)

Comparative example 7 was carried out in the same manner as Example 12 except that A-1 (acrylic polymer) and D-1 (anhydrous maleic acid-modified polypropylene resin) were not used in step II in Example 12. Table 2 shows evaluation results for the obtained molded product. The content of B-1 (carbon fiber) in the molded product was 30% by weight.

[Table 2]

| | (A) | (B) | (C) | (D) | Bending property Bending property | | Izod impact-resistant property | |
|---|---|---|---|---|---|---|---|---|
| | | | | | Strength | Elastic modulus | Unnotched | Notched |
| | | | | | (MPa) | (GPa) | (KJ/m2) | (J/m) |
| Example 11 | A-1 | B-1 | C-1 | - | 311 | 11.8 | 75 | - |

(continued)

| | (A) | (B) | (C) | (D) | Bending property Strength (MPa) | Bending property Elastic modulus (GPa) | Izod impact-resistant property Unnotched (KJ/m2) | Izod impact-resistant property Notched (J/m) |
|---|---|---|---|---|---|---|---|---|
| Example 12 | A-1 | B-1 | C-3 | D-1 | 242 | 11.0 | 68 | - |
| Comparative example 6 | - | B-1 | C-1 | - | 274 | 11.2 | 71 | - |
| Comparative example 7 | - | B-1 | C-3 | - | 213 | 10.7 | 63 | - |

The following is clearly understood based on the results of Examples 11 and 12 and Comparative examples 6 and 7 in table 2.

That is, the fiber-reinforced thermoplastic resin composition of Example 11 is superior in mechanical properties to the fiber-reinforced thermoplastic resin composition of Comparative example 6. In addition, the fiber-reinforced thermoplastic resin composition of Example 12 is superior in mechanical properties to the fiber-reinforced thermoplastic resin composition of Comparative example 7.

The following Examples 13 to 19 and Comparative examples 8 to 11 are Examples and Comparative examples of carbon fibers used for thermoplastic resin.

(Example 13)

I. Step of applying a sizing agent:

A 5%-by-weight aqueous solution of A-1 (acrylic polymer) was prepared and then applied to B-1 (carbon fiber) by a dipping method, followed by drying at 140°C for 5 minutes. The amount of adhering A-1 (acrylic polymer) was 1.5 parts by weight with respect to 100 parts by weight of B-1 (carbon fiber). Subsequently, a 1%-by-weight water dispersion of E-1 (sizing agent) was placed in a container and A-1 (carbon fiber) to which B-1 had adhered was dipped therein via a roller, followed by drying at 140°C for 5 minutes. The amount of adhering E-1 (sizing agent) was 0.5 parts by weight with respect to 100 parts by weight of A-1 (carbon fiber).

II. Step of cutting a fiber:

The carbon fiber obtained in the above step I of applying a sizing agent was cut to 1/4 inch in size with a cartridge cutter.

III. Extrusion step

A TEX-30$\alpha$ biaxial extruder (screw diameter: 30 mm, L/D = 32) (the Japan Steel Works, LTD.) was used. C-5 (mixed pellet of native polypropylene resin and anhydrous maleic acid-modified polypropylene resin) was supplied from the main hopper and B-1 (carbon fiber) that had been cut in the previous step was supplied from the side hopper downstream thereof. Then, sufficient kneading was carried out at a barrel temperature of 220°C and at 150 rpm, followed by deaeration via a vacuum vent located further downstream. Upon supply, the amount of B-1 (carbon fiber) was adjusted to 31.6 parts by weight with respect to 100 parts by weight of polypropylene resin with the use of a weight feeder. The molten resin was discharged from the die outlet (diameter: 5 mm). The obtained strand was cooled and then cut with a cutter. Thus, molding material pellets were obtained.

IV. Injection molding step:

The molding material pellets obtained in the extrusion step were molded into a test piece (molded product) used for property evaluation at a cylinder temperature of 220°C and a mold temperature of 60°C with the use of a J350EIII injection molding machine (The Japan Steel Works, LTD.). The obtained test piece was allowed to stand in a thermo-hygrostat adjusted to 23°C and 50% RH for 24 hours and then subjected to a property evaluation test. Subsequently, the thus obtained test piece (molded product) used for property evaluation was evaluated according to the above method for evaluating an injection molding product. Evaluation results are summarized in table 3. The weight proportion B-1

(carbon fiber) to polypropylene resin in the obtained molded product was 31.6/100.

(Example 14)

Example 14 was carried out in the same manner as Example 1 except that A-3 (acrylic polymer) was used in step I in Example 13. Table 3 shows evaluation results for the obtained molded product. The weight proportion of B-1 (carbon fiber) to polypropylene resin in the molded product was 31.6/100.

(Example 15)

I. Step of applying a sizing agent:

A 5%-by-weight solution of A-2 (acrylic polymer) was prepared and then applied to B-1 (carbon fiber) by a dipping method, followed by drying at 140°C for 5 minutes. The amount of adhering A-2 was 1.5 parts by weight with respect to 100 parts by weight of B-1 (carbon fiber). The following steps II to IV were carried out in the same manner as Example 13. The weight proportion of B-1 (carbon fiber) to polypropylene resin in the obtained molded product was 31.6/100. Table 3 shows the results.

(Example 16)

I. Step of applying a sizing agent:

A 5%-by-weight solution of A-4 (oxazoline-group-containing polymer) was prepared and then applied to B-1 (carbon fiber) by a dipping method, followed by drying at 140°C for 5 minutes. The amount of adhering A-4 was 1.5 parts by weight with respect to 100 parts by weight of B-1 (carbon fiber). The following steps II to IV were carried out in the same manner as Example 13. The weight proportion of B-1 (carbon fiber) to polypropylene resin in the obtained molded product was 31.6/100. Table 3 shows the results.

(Example 17)

I. Step of applying a sizing agent:

A 5%-by-weight solution of A-5 (oxazoline-group-containing polymer) was prepared and then applied to B-1 (carbon fiber) by a dipping method, followed by drying at 140°C for 5 minutes. The amount of adhering A-5 was 1.5 parts by weight with respect to 100 parts by weight of B-1 (carbon fiber). The following steps II to IV were carried out in the same manner as Example 13. The weight proportion of B-1 (carbon fiber) to polypropylene resin in the obtained molded product was 31.6/100. Table 3 shows the results.

(Example 18)

I. Step of applying a sizing agent:

A 5%-by-weight solution of A-3 (acrylic polymer) was prepared and then applied to B-1 (carbon fiber) by a dipping method, followed by drying at 140°C for 5 minutes. The amount of adhering A-3 was 1.5 parts by weight with respect to 100 parts by weight of B-1 (carbon fiber). Subsequently, a 5% by weight water dispersion of D-1(polymer) was prepared and then applied to B-1 (carbon fiber) by a dipping method, followed by drying at 140°C for 5 minutes. The amount of adhering D-1 (polymer) was 0.5 parts by weight with respect to 100 parts by weight of B-1 (carbon fiber). The following steps II to IV were carried out in the same manner as Example 1. The weight proportion of B-1 (carbon fiber) to polypropylene resin in the obtained molded product was 31.6/100. Table 3 shows the results.

(Example 19)

Example 19 was carried out in the same manner as Example 14 except that B-3 (carbon fiber) was used in Example 14. The weight proportion of B-1 (carbon fiber) to polypropylene resin in the obtained molded product was 31.6/100. Table 3 shows the results.

(Comparative example 8)

Comparative example 8 was carried out in the same manner as Example 14 except that A-1 (acrylic polymer) was not applied in the step of applying a sizing agent (step I) of Example 13. The weight proportion of B-1 (carbon fiber) to polypropylene resin in the obtained molded product was 31.6/100. Table 3 shows the results.

(Comparative example 9)

Comparative example 9 was carried out in the same manner as Example 15 except that the prepared 5% by weight tetrahydrofuran solvent solution of A-6 (polymethacrylic acid methyl) was used instead of A-2 (acrylic polymer) in the step of applying a sizing agent (step I) of Example 15. The amount of adhering A-6 was 1.5 parts by weight with respect to 100 parts by weight of B-1 (carbon fiber). The weight proportion of B-1 (carbon fiber) to polypropylene resin in the obtained molded product was 31.6/100. Table 3 shows the results.

(Comparative example 10)

Comparative example 10 was carried out in the same manner as Example 15 except that the prepared 5% by weight aqueous solution of A-7 (polyacrylamide) was used instead of A-2 (acrylic polymer) in the step of applying a sizing agent (step I) of Example 15. The amount of adhering A-7 was 1.5 parts by weight with respect to 100 parts by weight of B-1 (carbon fiber). The weight proportion of B-1 (carbon fiber) to polypropylene resin in the obtained molded product was 31.6/100. Table 3 shows the results.

(Comparative example 11)

Comparative example 11 was carried out in the same manner as Example 15 except that the prepared 5% by weight aqueous solution of A-8 (polyamide) was used instead of A-2 (acrylic polymer) in the step of applying a sizing agent (step I) of Example 15. The amount of adhering A-8 was 1.5 parts by weight with respect to 100 parts by weight of B-1 (carbon fiber). The weight proportion of B-1 (carbon fiber) to polypropylene resin in the obtained molded product was 31.6/100. Table 3 shows the results.

[Table 3]

| | (A) | (B) | (C) | (D) | (E) | Bending property | | Izod impact-resistant property | |
|---|---|---|---|---|---|---|---|---|---|
| | | | | | | Strength | Elastic modulus | Unnotched | Notched |
| | | | | | | (MPa) | (GPa) | (KJ/m2) | (J/m) |
| Example 13 | A-1 | B-1 | C-5 | - | E-1 | 153 | 11.2 | 44 | 79 |
| Example 14 | A-3 | B-1 | C-5 | - | E-1 | 149 | 10.5 | 41 | 76 |
| Example 15 | A-2 | B-1 | C-5 | - | - | 135 | 11.1 | 30 | 71 |
| Example 16 | A-4 | B-1 | C-5 | - | - | 146 | 10.8 | 42 | 74 |
| Example 17 | A-5 | B-1 | C-5 | - | - | 120 | 10.3 | 34 | 70 |
| Example 18 | A-3 | B-1 | C-5 | D-1 | - | 155 | 11.0 | 44 | 76 |
| Example 19 | A-3 | B-3 | C-5 | - | - | 162 | 11.5 | 48 | 78 |
| Comparative example 8 | - | B-1 | C-5 | - | E-1 | 96 | 9.4 | 18 | 58 |
| Comparative example 9 | A-6 | B-1 | C-5 | - | - | 89 | 8.5 | 14 | 50 |
| Comparative example 10 | A-7 | B-1 | C-5 | - | - | 75 | 8.4 | 12 | 48 |
| Comparative example 11 | A-8 | B-1 | C-5 | - | - | 64 | 8.1 | 13 | 44 |

The following is clearly understood based on the results of Examples 13 to 19 and Comparative examples 8 to 11 in table 3. That is, the carbon fiber-reinforced thermoplastic resin compositions of Examples 13 to 17 are superior in mechanical properties to the carbon fiber-reinforced thermoplastic resin compositions of Comparative examples 8 to 11. Also in Example 18, the carbon fiber-reinforced thermoplastic resin composition superior in mechanical properties was obtained with the further addition of a polymer (D). Also in Example 19, the carbon fiber-reinforced thermoplastic resin composition further superior in mechanical properties was obtained by increasing the surface atom ratio between oxygen and carbon of the carbon fiber (O/C) and the surface atom ratio between carbons in carboxyl group and a total quantity of carbons of the carbon fiber (COOH/C).

Industrial Applicability

The fiber-reinforced thermoplastic resin composition of the present invention is superior in adhesivity between reinforcing fiber and thermoplastic resin, and thus it is possible to sufficiently improve mechanical properties of a molded product with such composition. Therefore, a molded product comprising the thermoplastic resin composition of the present invention is preferably used for electric or electronic apparatus, office automation apparatus, parts of electric household appliances or automobiles, internal members, housings, and the like.

## Claims

1. A fiber-reinforced thermoplastic resin composition comprising a (meth)acrylic polymer (A1) having an aminoalkylene group in a side chain (0.1% to 10% by weight), reinforcing fibers (B) (1% to 70% by weight), and a thermoplastic resin (C) (20% to 98.9% by weight).

2. The fiber-reinforced thermoplastic resin composition according to claim 1, wherein the aminoalkylene group has a primary amine-terminal.

3. The fiber-reinforced thermoplastic resin composition according to claim 1 or 2, wherein the (meth)acrylic polymer (A1) is a polymer containing a unit (5 to 100 mol%) represented by the following structural formula (1):

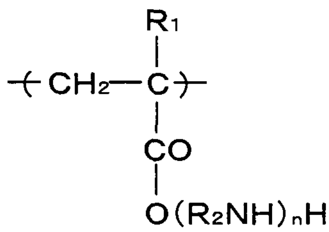

(1)

(where $R_1$ represents -H or $-C_mH_{2m+1}$ (where m represents an integer of 1 or more), $R_2$ represents an alkylene group having a linear or branch structure containing 1 to 5 carbon atoms, n represents a value of 0.01 to 10).

4. The fiber-reinforced thermoplastic resin composition according to any one of claims 1 to 3, wherein the (meth)acrylic polymer (A1) has an amine hydrogen equivalent weight of 100 to 1,000 g/eq.

5. The fiber-reinforced thermoplastic resin composition according to any one of claims 1 to 4, wherein the (meth)acrylic polymer (A1) has a weight-average molecular weight of 5,000 to 200,000.

6. A fiber-reinforced thermoplastic resin composition comprising a polymer (A2) having an oxazoline group in a side chain (0.1 % to 10% by weight), reinforcing fibers (B) (1% to 70% by weight), and a thermoplastic resin (C) (20% to 98.9% by weight).

7. The fiber-reinforced thermoplastic resin composition according to claim 6, wherein the polymer (A2) having an oxazoline group in a side chain is a polymer containing a unit (10 to 100 mol%) represented by the following structual formula (2):

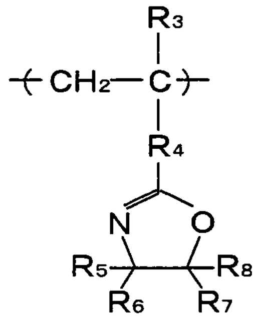

(2)

(where $R_3$ represents a hydrogen or a methyl group, $R_4$ represents an alkylene group having a linear or branch structure containing 0 to 5 carbon atoms, and $R_5$ to $R_8$ represents a hydrogen or an alkyl group containing 1 to 20 carbon atoms).

**8.** The fiber-reinforced thermoplastic resin composition according to claim 6 or 7, wherein the oxazoline equivalent weight of the polymer (A2) having an oxazoline group in a side chain is 200 to 2,000 g/eq.

**9.** The fiber-reinforced thermoplastic resin composition according to any one of claims 6 to 8, wherein the weight-average molecular weight of the polymer (A2) having an oxazoline group in a side chain is 5,000 to 100,000.

**10.** The fiber-reinforced thermoplastic resin composition according to any one of claims 1 to 9, wherein the (meth)acrylic polymer (A1) having an aminoalkylene group in a side chain or polymer (A2) having an oxazoline group in a side chain is distributed around the reinforcing fibers (B).

**11.** The fiber-reinforced thermoplastic resin composition according to any one of claims 1 to 10, wherein the reinforcing fibers (B) are carbon fibers or basalt fibers.

**12.** The fiber-reinforced thermoplastic resin composition according to claim 11, wherein the reinforcing fibers (B) are fibers having the surface atom ratio between oxygen and carbon(O/C) of 0.05 to 0.5 measured by Electron spectroscopy for chemical analysis.

**13.** The fiber-reinforced thermoplastic resin composition according to any one of claims 1 to 12, wherein the reinforcing fibers (B) are formed in a bundle with a sizing agent.

**14.** The fiber-reinforced thermoplastic resin composition according to any one of claims 1 to 13, wherein the number-average fiber length of the reinforcing fibers (B) is 1 to 60 mm.

**15.** The fiber-reinforced thermoplastic resin composition according to any one of claims 1 to 14, wherein the thermoplastic resin (C) is at least one selected from the group consisting of polyester resin, polyolefin resin, polyamide resin, polycarbonate resin, and polyetherimide resin.

**16.** The fiber-reinforced thermoplastic resin composition according to any one of claims 1 to 14, wherein the thermoplastic resin (C) is polyolefin resin.

**17.** The fiber-reinforced thermoplastic resin composition according to claim 16, wherein the thermoplastic resin (C) is a modified polyolefin resin comprising at least one functional group selected from the group consisting of a carboxyl group, an acid anhydride group, and an epoxy group.

**18.** The fiber-reinforced thermoplastic resin composition according to any one of claims 1 to 17, which further contains a polymer (D) (0% to 10% by weight) comprising at least one functional group selected from the group consisting of a carboxyl group, an acid anhydride group, and an epoxy group.

**19.** The fiber-reinforced thermoplastic resin composition according to claim 18, wherein an acid value or an epoxy value of the polymer (D) 10 to 500 mg KOH/g.

**20.** The fiber-reinforced thermoplastic resin composition according to claim 18 or 19, wherein the weight-average molecular weight of the polymer (D) is 5,000 to 100,000.

**21.** A method for producing a fiber-reinforced thermoplastic resin composition comprising at least the following steps 1a, 2a, and 3a:

step 1a of applying a (meth)acrylic polymer (A1) having an aminoalkylene group in a side chain or a polymer (A2) having an oxazoline group in a side chain (0.1 % to 10% by weight) to reinforcing fibers (B) (1% to 70% by weight);
step 2a of melting a thermoplastic resin (C); and
step 3a of mixing the reinforcing fibers obtained in step 1a with the thermoplastic resin melted in step 2a and then integrating the resultant with a thermoplastic resin (C) (20% to 98.9% by weight).

**22.** The method for producing a fiber-reinforced thermoplastic resin composition according to claim 21, wherein the (meth)acrylic polymer (A1) having an aminoalkylene group in a side chain or a polymer (A2) having an oxazoline group in a side chain is applied in an aqueous solution or water dispersion form in step 2a.

**23.** The method for producing a fiber-reinforced thermoplastic resin composition according to claim 21 or 22, such method comprising applying a polymer (D) (in an aqueous solution or water dispersion form) having at least one functional group selected from the group consisting of a carboxyl group, an acid anhydride group, and an epoxy group after applying the (meth)acrylic polymer (A1) having an aminoalkylene group in a side chain or polymer (A2) having an oxazoline group in a side chain in step 2a.

**24.** A method for producing a fiber-reinforced thermoplastic resin composition comprising at least the following steps 1b, 2b, and 3b:

step 1b of converting reinforcing fibers (B) into sheet-type fabric such as knitted fabric, woven cloth, web, nonwoven cloth, felt, or mat;
step 2b of applying a (meth)acrylic polymer (A1) having an aminoalkylene group in a side chain or a polymer (A2) having an oxazoline group in a side chain (0.1% to 10% by weight) to the fabric (1% to 70% by weight) obtained in step 1b; and
step 3b of applying a thermoplastic resin (C) (20% to 98.9% by weight) to the fabric to which a (meth)acrylic polymer (A1) having an aminoalkylene group in a side chain or a polymer (A2) having an oxazoline group in a side chain has been applied in step 2b and carrying out heat melting for integration.

**25.** The method for producing a fiber-reinforced thermoplastic resin composition according to claim 24, wherein a portion of the thermoplastic resin (C) is mixed in advance with the reinforcing fibers (B) in step 1b.

**26.** The method for producing a fiber-reinforced thermoplastic resin composition according to claim 24 or 25, wherein a (meth)acrylic polymer (A1) having an aminoalkylene group in a side chain or a polymer (A2) having an oxazoline group in a side chain is applied in an aqueous solution or water dispersion form in step 2b.

**27.** The method for producing a fiber-reinforced thermoplastic resin composition according to any one of claims 24 to 26, such method comprising applying a polymer (D) (in an aqueous solution or water dispersion form) having at least one functional group selected from the group consisting of a carboxyl group, an acid anhydride group, and an epoxy group after applying the (meth)acrylic polymer (A1) having an aminoalkylene group in a side chain or polymer (A2) having an oxazoline group in a side chain in step 2a.

**28.** The method for producing a fiber-reinforced thermoplastic resin composition according to claims 24 to 27, wherein the thermoplastic resin (C) is in a particle, film, or nonwoven cloth form.

**29.** A carbon fiber for thermoplastic resin comprising a carbon fiber to which a (meth)acrylic polymer (A3) has adhered and having the surface atom ratio between nitrogen and carbon (nitrogen atom N/carbon atom C) of the (meth) acrylic polymer (A3) meausured by Electron spectroscopy for chemical analysis of 0.001 or more and saturated water absorption of 8% by weight or less at a temperature of 25°C and a humidity of 65%.

**30.** The carbon fiber for thermoplastic resin according to claim 29, wherein the (meth)acrylic polymer (A3) is a polymer having an aminoalkylene group in a side chain.

**31.** The carbon fiber for thermoplastic resin according to claim 30, wherein the aminoalkylene group has a primary amine-terminal.

**32.** The carbon fiber for thermoplastic resin according to any one of claims 29 to 31, wherein the (meth)acrylic polymer (A3) is a polymer containing a unit (5 to 100 mol%) represented by the following structural formula (3):

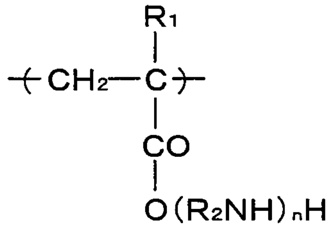

(3)

(where $R_1$ represents -H or $-C_mH_{2m+1}$ (where m represents an integer of 1 or more), $R_2$ represents an alkylene group having a linear or branch structure containing 1 to 5 carbon atoms, n represents a value of 0.01 to 10).

**33.** The carbon fiber for thermoplastic resin according to any one of claims 29 to 32, wherein the (meth)acrylic polymer (A1) has an amine hydrogen equivalent weight of 100 to 1,000 g/eq.

**34.** The carbon fiber for thermoplastic resin according to any one of claims 29 to 33, wherein the (meth)acrylic polymer (A1) has a weight-average molecular weight of 5,000 to 100,000.

**35.** The carbon fiber for thermoplastic resin according to any one of claims 29 to 34, wherein the amount of the adhering (meth)acrylic polymer (A3) is 0.1 to 20 parts by weight with respect to 100 parts by weight of the carbon fiber.

**36.** A carbon fiber for thermoplastic resin comprising a carbon fiber to which a polymer having an oxazoline group (A4) has adhered and having the surface atom ratio between nitrogen and carbon (N/ C) of the oxazoline-group-containing polymer (A4) measured by Electron spectroscopy for chemical analysis of 0.001 or more.

**37.** The carbon fiber for thermoplastic resin according to claim 36, wherein the oxazoline-group-containing polymer (A4) has saturated water absorption of 8% by weight or less at a temperature of 25°C and a humidity of 65%.

**38.** The carbon fiber for thermoplastic resin according to claim 36 or 37, wherein the oxazoline-group-containing polymer (A4) is a polymer containing a unit (10 to 100 mol%) represented by the following structual formula (4):

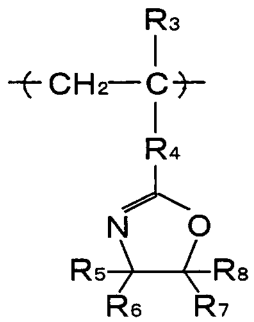

(4)

(where $R_3$ represents a hydrogen or a methyl group, $R_4$ represents an alkylene group having a linear or branch structure containing 0 to 5 carbon atoms, and $R_5$ to $R_8$ represents a hydrogen or an alkyl group containing 1 to 20 carbon atoms).

**39.** The carbon fiber for thermoplastic resin according to any one of claims 36 to 38, wherein the oxazoline equivalent weight of the oxazoline-group-containing polymer (A4) is 200 to 2,000 g/eq.

**40.** The carbon fiber for thermoplastic resin according to any one of claims 36 to 39, wherein the weight-average

molecular weight of the oxazoline-group-containing polymer (A4) is 5,000 to 100,000.

**41.** The carbon fiber for thermoplastic resin according to any one of claims 36 to 40, wherein the amount of the adhering oxazoline-group-containing polymer (A4) is 0.1 to 20 parts by weight with respect to 100 parts by weight of the carbon fiber.

**42.** The carbon fiber for thermoplastic resin according to any one of claims 29 to 41, wherein the surface atom ratio between oxygen and carbon (O/C) of the carbon fiber (A) measured by Electron spectroscopy for chemical analysis is 0.05 to 0.50 and the surface atom ratio between carbons in carboxyl group and a total quantity of carbons( COOH/C) of the carbon fiber measured by Electron spectroscopy for chemical analysis with chemical modification1% to 5%.

**43.** The carbon fiber for thermoplastic resin according to any one of claims 29 to 42, wherein a polymer (D) comprising at least one functional group selected from the group consisting of a carboxyl group, an acid anhydride group, and an epoxy group is allowed to adhere in an amount of 0.01 to 20 parts by weight with respect to 100 parts by weight of the carbon fiber.

**44.** The carbon fiber for thermoplastic resin according to claim 43, wherein an acid value or an epoxy valu of the polymer (D) is 10 to 500 mg KOH/g.

**45.** The carbon fiber for thermoplastic resin according to claim 43 or 44, wherein the weight-average molecular weight of the polymer (D) is 5,000 to 100,000.

**46.** The carbon fiber for thermoplastic resin according to any one of claims 29 to 45, wherein at least one resin serving as a sizing agent (E) selected from the group consisting of urethane resin, acrylic resin, epoxy resin, polyamide resin, polyester resin, and polyether resin is allowed to adhere in an amount of 0 to 20 parts by weight with respect to 100 parts by weight of the carbon fiber.

**47.** The carbon fiber for thermoplastic resin according to any one of claims 29 to 46, wherein the fiber length is 1 to 60 mm.

**INTERNATIONAL SEARCH REPORT**

International application No.
PCT/JP2006/319148

A. CLASSIFICATION OF SUBJECT MATTER
*C08L101/00*(2006.01)i, *C08J5/04*(2006.01)i, *C08K7/02*(2006.01)i, *C08L33/14*(2006.01)i

According to International Patent Classification (IPC) or to both national classification and IPC

B. FIELDS SEARCHED

Minimum documentation searched (classification system followed by classification symbols)
C08L101/00, C08J5/04, C08K7/02, C08L33/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2006-089734 A (Toray Industries, Inc.), 06 April, 2006 (06.04.06), Claims; Par. Nos. [0001], [0034] to [0035], [0040] to [0042], [0051] to [0087], [0093] to [0106] (Family: none) | 1-5,10-28<br>6-9,29-47 |
| P,X<br>P,A | JP 2006-045685 A (Hiraoka Shikisen Kabushiki Kaisha), 16 February, 2006 (16.02.06), Claims; Par. Nos. [0011] to [0022], [0038] to [0047] (Family: none) | 6-28<br>1-5,29-47 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 December, 2006 (01.12.06) | 12 December, 2006 (12.12.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No. PCT/JP2006/319148

C (Continuation). DOCUMENTS CONSIDERED TO BE RELEVANT

| Category* | Citation of document, with indication, where appropriate, of the relevant passages | Relevant to claim No. |
|---|---|---|
| P,X<br>P,A | JP 2005-272661 A (Matsushita Electric Works, Ltd.),<br>06 October, 2005 (06.10.05),<br>Claims; Par. Nos. [0006], [0010], [0020] to [0034]<br>(Family: none) | 6-28<br>1-5,29-47 |
| E,A | JP 2006-273962 A (Matsushita Electric Works, Ltd.),<br>12 October, 2006 (12.10.06),<br>Claims; Par. No. [0005]<br>(Family: none) | 1-47 |
| A | JP 2005-002202 A (Idemitsu Petrochemical Co., Ltd.),<br>06 January, 2005 (06.01.05),<br>Claims; Par. Nos. [0012] to [0032]<br>(Family: none) | 1-47 |
| A | JP 2003-166162 A (Matsushita Electric Works, Ltd.),<br>13 June, 2003 (13.06.03),<br>Claims; Par. No. [0001]<br>(Family: none) | 1-47 |
| A | JP 5-339552 A (Nippon Shokubai Co., Ltd.),<br>21 December, 1993 (21.12.93),<br>Claims; Par. Nos. [0001], [0005], [0021]<br>(Family: none) | 1-47 |

Form PCT/ISA/210 (continuation of second sheet) (April 2005)

**INTERNATIONAL SEARCH REPORT**

International application No.
PCT/JP2006/319148

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The technical feature of the invention of claims 1-5, 29-35 is in that a (meth)acrylic polymer having an aminoalkylene group in a side chain is reacted with a functional group of a reinforcing fiber.

The technical feature of the invention of claims 6-9, 36-41 is in that a polymer having an oxazoline group in a side chain is reacted with a functional group of a reinforcing fiber.

Please note that the composition of claims 10-20, the production method of claims 21-28 and the carbon fiber of claims 42-47 collectively refer to the above two inventions.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58126375 A
- JP 53106752 A
- JP 6107442 A
- JP 2005146431 A
- JP 4228677 A
- JP 2005213478 A